# EUROPEAN PATENT APPLICATION

(11) **EP 3 945 745 A1**
(43) Date of publication of application: **02.02.2022**
(21) Application number: 20189045.6
(22) Date of filing: 31.07.2020
(51) Int. Cl.: H04W 72/12, H04W 72/14

(54) **USER EQUIPMENT, SCHEDULING NODE, METHOD FOR USER EQUIPMENT, AND METHOD FOR SCHEDULING NODE**

(71) Applicant: Panasonic Intellectual Property Corporation of America, Torrance, CA 90503 (US)
(72) Inventor: LI, Hongchao, 63225 Langen (DE); YAMAMOTO, Tetsuya, Osaka, 540-6207 (JP); SUZUKI, Hidetoshi, Osaka, 540-6207 (JP)
(74) Representative: Grünecker Patent- und Rechtsanwälte PartG mbB

(57) **Abstract**

The disclosure relates to a user equipment (UE). The UE comprises a transceiver and a circuitry. The transceiver, in operation, receives downlink control information (DCI) signaling; and control information. The circuitry, in operation, obtains, from the DCI signaling, an indication indicating, for each of a plurality of transport blocks (TBs), scheduling of one or more transmissions of said TB. The circuitry, in operation, obtains, from the control information, a cancellation indication (CI) indicating a resource. Furthermore, the circuitry, in operation, determines, based on the indicated resource and a predetermined rule, which of the scheduled transmissions of the plurality of TBs are cancelled.

## Description

### BACKGROUND

### Technical field

The present disclosure is directed to methods, devices and articles in communication systems, such as 3GPP communication systems.

The present disclosure relates to transmission and reception of signals in a communication system. In particular, the present disclosure relates to methods and apparatuses for such transmission and reception.

### Description of the Related Art

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE and NR, further improvements and options may facilitating efficient operation of the communication system as well as particular devices pertaining to the system.

### SUMMARY

One non-limiting and exemplary embodiment facilitates efficient scheduling of multiple transport blocks (TBs) by means of Downlink Control Information (DCI) signalling (in the present disclosure, also referred to as *"multiple TB scheduling DCIs"*) as well as efficient cancellation of transmissions scheduled by multiple TB scheduling DCIs.

In an embodiment, the techniques disclosed here feature an apparatus (e.g. a user equipment, UE). The apparatus comprises a transceiver that, in operation, receives DCI signaling; and control information. The apparatus further comprises circuitry which, in operation obtains, from the DCI signaling, an indication (in the present disclosure, also referred to as *"scheduling indication"*). The indication indicates, for each of a plurality of TBs scheduling of one or more transmissions of said TB. The circuitry obtains, from the control information, a cancellation indication (CI) indicating a resource. Furthermore, the circuitry determines, based on the indicated resource and a predetermined rule (in the present disclosure, also referred to as *"cancellation rule"*), which of the scheduled transmissions of the plurality of TBs are cancelled.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system;
- **Fig. 2**: is a schematic drawing that shows a functional split between NG-RAN and 5GC;
- **Fig. 3**: is a sequence diagram for RRC connection setup/reconfiguration procedures;
- **Fig. 4**: is a schematic drawing showing usage scenarios of Enhanced mobile broadband (eMBB), Massive Machine Type Communications (mMTC) and Ultra Reliable and Low Latency Communications (URLLC);
- **Fig. 5**: is a block diagram showing an exemplary 5G system architecture for a non-roaming;
- **Fig. 6**: is a block diagram illustrating functional components of a base station and a user equipment according to an embodiment;
- **Fig. 7**: is a block diagram showing steps of an exemplary communication method for a UE as well as steps of an exemplary communication method for a base station;
- **Fig. 8a**: is a schematic drawing of an exemplary scheduling of two transport blocks with repetition and a transmission gap between the TBs, but without interleaving;
- **Fig. 8b**: is a schematic drawing of an exemplary scheduling of two transport blocks with repetition and interleaving, but without transmission gap;
- **Fig. 8c**: is a schematic drawing of an exemplary scheduling of four transport blocks without repetition, interleaving, and transmission gap;
- **Fig. 8d**: is a schematic drawing of an exemplary scheduling of two transport blocks with a transmission gap between TBs, but without repetition and interleaving;
- **Fig. 9**: is a schematic drawing of an exemplary scheduling of two transport blocks using the Configured Grant (CG) or Semi Persistent Scheduling (SPS) framework;
- **Fig. 10a**: is a schematic drawing of an exemplary scenario in which a DCI scheduling two transport blocks with four repetitions and, subsequently, a CI indicating a first slot are received;
- **Fig. 10b**: is a schematic drawing illustrating, using the scenario illustrated in Fig. 10a, a first exemplary cancellation rule;
- **Fig. 10c**: is a schematic drawing illustrating, using the scenario illustrated in Fig. 10a, a third exemplary cancellation rule;
- **Fig. 10d**: is a schematic drawing illustrating, using the scenario illustrated in Fig. 10a, a fourth exemplary cancellation rule;
- **Fig. 11a**: is a schematic drawing of an exemplary scenario in which a DCI scheduling two transport blocks with four repetitions and, subsequently, a CI indicating a second slot are received;
- **Fig. 11b**: is a schematic drawing illustrating, using the scenario illustrated in Fig. 11a, a second exemplary cancellation rule;
- **Fig. 11c**: is a schematic drawing illustrating, using the scenario illustrated in Fig. 11a, a fifth exemplary cancellation rule;
- **Fig. 12a**: is a schematic drawing of illustrating assignment of priorities to four TBs, based on a first threshold;
- **Fig. 12b**: is a schematic drawing of illustrating assignment of priorities to four TBs, based on a second threshold;
- **Fig. 13a**: is a schematic drawing of illustrating assignment of priorities to two TBs, based on a first explicit priority indication; and
- **Fig. 13b**: is a schematic drawing of illustrating assignment of priorities to two TBs, based on a second explicit priority indication.

### DETAILED DESCRIPTION

### 5G NR system architecture and protocol stacks

3GPP has been working at the next release for the 5th generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

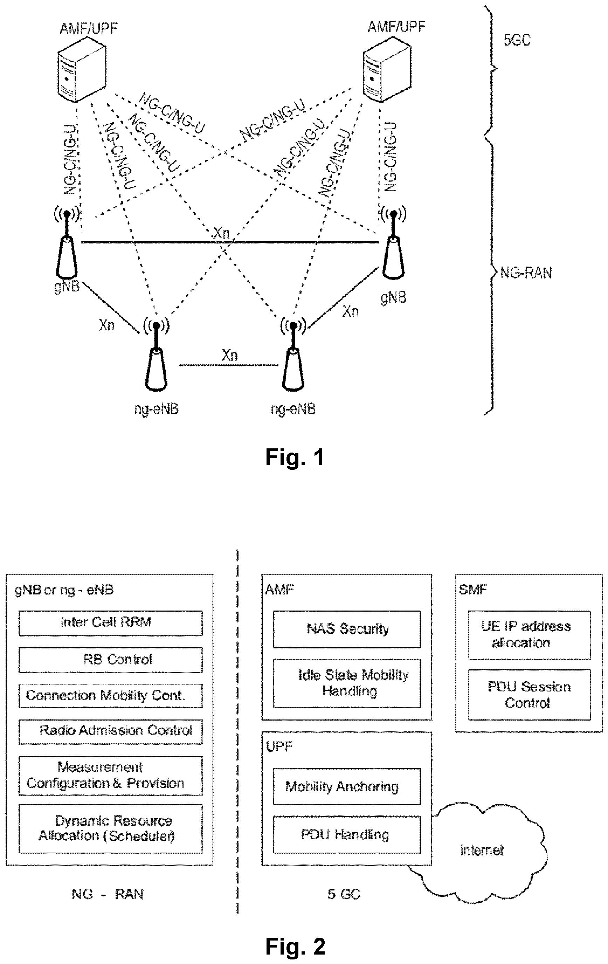

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v15.6.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH(Physical Uplink Shared Channel) and PUCCH(Physical Uplink Control Channel) for uplink and PDSCH(Physical Downlink Shared Channel), PDCCH(Physical Downlink Control Channel) and PBCH(Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v16.0.0, e.g. section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

Comparing to LTE numerology (subcarrier spacing and symbol length), NR supports multiple different types of subcarrier spacing, labeled by a parameter *µ* (in LTE there is only a 15 kHz subcarrier spacing, corresponding to *µ* = 0 in NR). The types NR numerology is summarized in 3GPP TS 38.211, v 15.7.0.

### 5G NR functional split between NG-RAN and 5GC

**Fig. 2** illustrates functional split between NG-RAN and 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

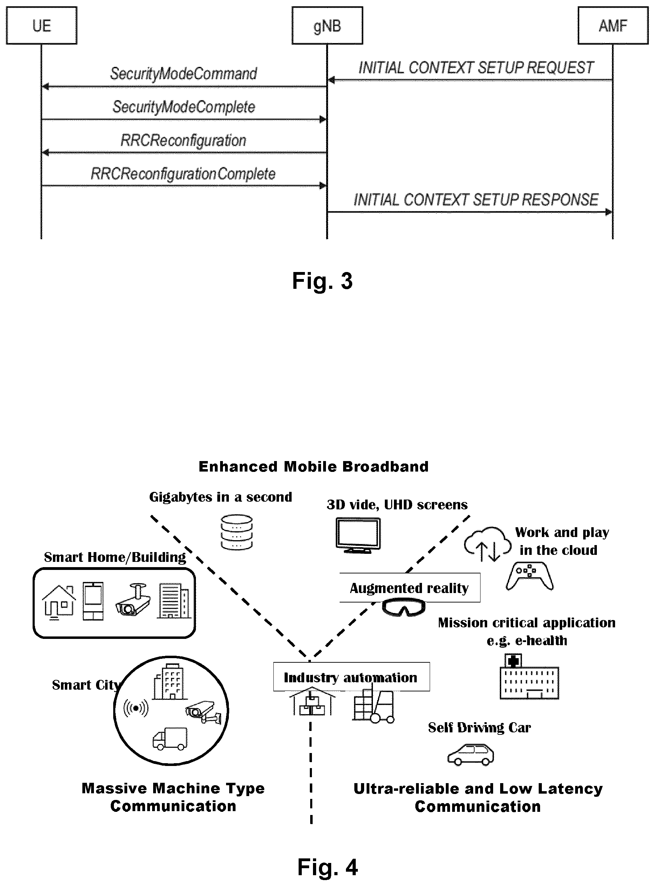

**Fig. 3** illustrates some interactions between a UE, gNB, and AMF (a 5GC entity) in the context of a transition of the UE from RRC_IDLE to RRC_CONNECTED for the NAS part (see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for exampleAMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### Usage Scenarios of IMT for 2020 and beyond

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. ITU-R M.2083 Fig.2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁻⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

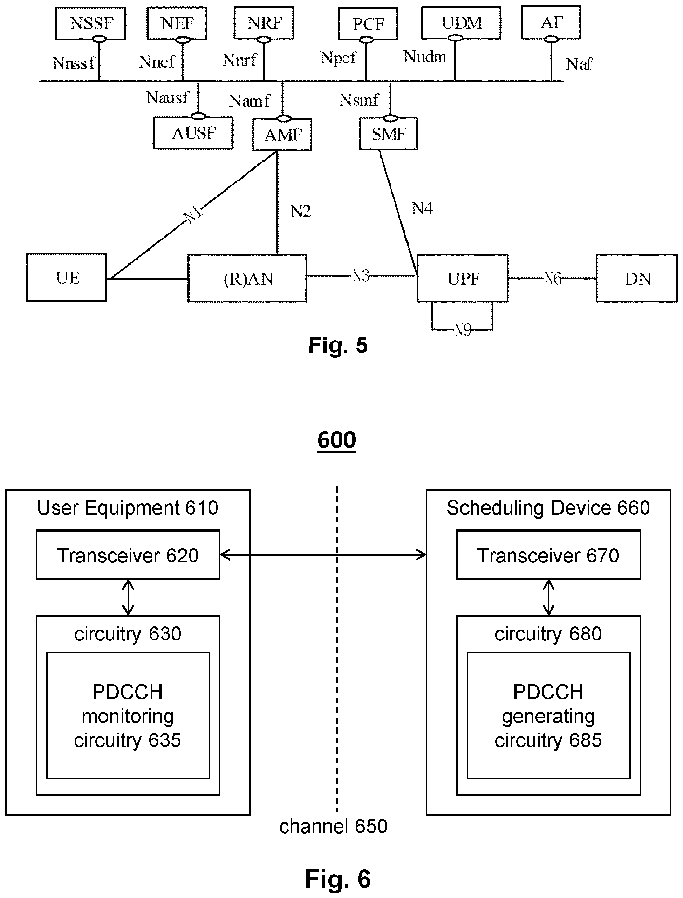

**Fig. 5** illustrates a 5G NR non-roaming reference architecture (see TS 23.501 v16.1.0, section 4.23). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

**Fig. 5** shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMMB and mMTC services to at least one of functions (for example NEF, AMF, SMF, PCF,UPF, etc) of the 5GC to establish a PDU session including a radio bearer between a gNodeB and a UE in accordance with the QoS requirement and control circuitry, which, in operation, performs the services using the established PDU session.

### RRC States (RRC_Connected, RRC_Inactive)

In LTE, the RRC state machine consisted of only two states, the RRC idle state (mainly characterized by high power savings, UE autonomous mobility and no established UE connectivity towards the core network) and the RRC connected state in which the UE can transmit user plane data while mobility is network-controlled to support lossless service continuity. In connection with 5G NR, the LTE-related RRC state machine may also be extended with an inactive state (see e.g. TS 38.331 v15.8.0, Figure 4.2.1-2), similar to the NR 5G as explained in the following.

The RRC in NR 5G (see TS 38.331 v15.8.0, section 4) supports the following three states, RRC Idle, RRC Inactive, and RRC Connected. A UE is either in RRC_CONNECTED state or in RRC_INACTIVE state when an RRC connection has been established. If this is not the case, i.e. no RRC connection is established, the UE is in RRC_IDLE state. The following state transitions are possible as illustrated in Fig. 6:
- from RRC_IDLE to RRC_CONNECTED, following e.g. the "connection establishment" procedure;
- from RRC_CONNECTED to RRC_IDLE, following e.g. the "connection release" procedure;
- from RRC_CONNECTED to RRC_INACTIVE, following e.g. the "connection release with suspend" procedure;
- from RRC_INACTIVE to RRC_CONNECTED, following e.g. the "connection resume" procedure;
- from RRC_INACTIVE to RRC_IDLE (uni-directional), following e.g. the "connection release" procedure.

The new RRC state, RRC Inactive, is defined for the new radio technology of 5G 3GPP, so as to provide benefits when supporting a wider range of services such as the eMBB (enhanced Mobile Broadband), mMTC (massive Machine Type Communications) and URLLC (Ultra-Reliable and Low-Latency Communications) which have very different requirements in terms of signalling, power saving, latency etc. The new RRC Inactive state shall thus be designed to allow minimizing signaling, power consumption and resource costs in the radio access network and core network while still allowing e.g. to start data transfer with low delay.

### Bandwidth Parts

NR systems will support much wider maximum channel bandwidths than LTE's 20 MHz (e.g. 100s of MHz). Wideband communication is also supported in LTE via carrier aggregation (CA) of up to 20 MHz component carriers. By defining wider channel bandwidths in NR, it is possible to dynamically allocate frequency resources via scheduling, which can be more efficient and flexible than the Carrier Aggregation operation of LTE, whose activation/deactivation is based on MAC Control Elements. Having single wideband carrier also has merit in terms of low control overhead as it needs only single control signaling (Carrier Aggregation requires separate control signaling per each aggregated carrier).

Moreover, like LTE, NR may also support the aggregation of multiple carriers via carrier aggregation or dual connectivity.

Since UEs are not always demanding high data rates, the use of a wide bandwidth may incur higher idling power consumption both from RF and baseband signal processing perspectives. In this regard, a newly developed concept of bandwidth parts for NR provides a means of operating UEs with smaller bandwidths than the configured channel bandwidth, so as to provide an energy efficient solution despite the support of wideband operation. This low-end terminal, which cannot access the whole bandwidth for NR, can benefit therefrom.

A bandwidth part (BWP) is a subset of the total cell bandwidth of a cell, e.g. the location and number of contiguous physical resource blocks (PRBs). It may be defined separately for uplink and downlink. Furthermore, each bandwidth part can be associated with a specific OFDM numerology, e.g. with a subcarrier spacing and cyclic prefix. For instance, bandwidth adaptation is achieved by configuring the UE with BWP(s) and telling the UE which of the configured BWPs is currently the active one.

Exemplarily, in 5G NR, a specific BWP is configured only for a UE in RRC_Connected state. For instance, other than an initial BWP (e.g. respectively one for UL and one for DL), a BWP only exists for UEs in connected state. To support the initial data exchange between the UE and the network, e.g. during the process of moving a UE from RRC_IDLE or RRC_INACTIVE state to RRC_CONNECTED state, the initial DL BWP and initial UL BWP are configured in the minimum SI.

Although the UE can be configured with more than one BWP (e.g. up to 4 BWP per serving cell, as currently defined for NR), the UE has only one active DL BWP at a time.

Switching between configured BWPs may be achieved by means of downlink control information (DCIs).

For the Primary Cell (PCell), the initial BWP is the BWP used for initial access, and the default BWP is the initial one unless another initial BWP is explicitly configured. For a Secondary Cell (SCell), the initial BWP is always explicitly configured, and a default BWP may also be configured. When a default BWP is configured for a serving cell, the expiry of an inactivity timer associated to that cell switches the active BWP to the default one.

Typically, it is envisaged that the downlink control information does not contain the BWP ID.

### Downlink Control Information (DCI)

PDCCH monitoring is done by the UE for instance so as to identify and receive information intended for the UE, such as the control information as well as the user traffic (e.g. the DCI on the PDCCH, and the user data on the PDSCH indicated by the PDCCH).

Control information in the downlink (can be termed downlink control information, DCI) has the same purpose in 5G NR as the DCI in LTE, namely being a special set of control information that e.g. schedules a downlink data channel (e.g. the PDSCH) or an uplink data channel (e.g. PUSCH). In 5G NR there are a number of different DCI Formats defined already (see TS 38.212 v16.0.0 section 7.3.1). An overview is given by the following table.

| **DCI format** | **Usage** | **RNTI** |
|---|---|---|
| 0_0 | Scheduling of PUSCH in one cell | C-RNTI, CS-RNTI, MCS-C-RNTI, Temporary C-RNTI |
| 0_1 | Scheduling of PUSCH in one cell | C-RNTI, CS-RNTI, MCS-C-RNTI, Temporary C-RNTI |
| 1_0 | Scheduling of PDSCH in one cell | C-RNTI, CS-RNTI, MCS-C-RNTI, Temporary C-RNTI, P-RNTI, Si-RNTI, RA-RNTI |
| 1_1 | Scheduling of PDSCH in one cell | C-RNTI, CS-RNTI, MCS-C-RNTI |
| 2_0 | Notifying a group of UEs of the slot format | SFI-RNTI |
| 2 1 | Notifying a group of UEs of the PRB(s) and OFDM symbol(s) where UE may assume no transmission is intended for the UE | INT-RNTI |
| 2 2 | Transmission of TPC commands for PUCCH and PUSCH | TPC-PUCCH-RNTI, TPC-PUSCH-RNTI |
| 2_3 | Transmission of a group of TPC commands for SRS transmissions by one or more UEs | TPC-SRS-RNTI |

PDCCH search spaces are areas in the downlink resource grid (time-frequency resources) where a PDCCH (DCI) may be carried. Put broadly, a radio resource region is used by a base station to transmit control information in the downlink to one or more UEs. The UE performs blind decoding throughout the search space trying to find PDCCH data (DCI). Conceptually, the Search Space concept in 5G NR is similar to LTE Search Space, even though there are many differences in terms of the details.

In 5G NR, PDCCH is transmitted in radio resource regions called control resource sets (CORESETs). In LTE, the concept of a CORESET is not explicitly present. Instead, PDCCH in LTE uses the full carrier bandwidth in the first 1-3 OFDM symbols (four for the most narrowband case). By contrast, a CORESET in NR can occur at any position within a slot and anywhere in the frequency range of the carrier, except that the UE is not expected to handle CORESETs outside its active bandwidth part (BWP). A CORESET is a set of physical radio resources (e.g. a specific area on the NR downlink resource grid) and a set of parameters that is used to carry PDCCH/DCI.

Accordingly, a UE monitors a set of PDCCH candidates in one or more CORESETs on the active DL BWP on each activated serving cell configured with PDCCH monitoring using the corresponding search space sets where monitoring implies decoding each PDCCH candidate according to the monitored DCI formats, e.g. as defined in 3GPP TS 38.213 version 16.0.0, sections 10 and 11.

In brief, a search space may comprise a plurality of PDCCH candidates associated with the same aggregation level (e.g. where PDCCH candidates differ regarding the DCI formats to monitor). In turn, a search space set may comprise a plurality of search spaces of different aggregation levels, but being associated with the same CORESET. Unlike in LTE, as mentioned above, where control channels span the entire carrier bandwidth, the bandwidth of a CORESET can be configured, e.g. within an active DL frequency bandwidth part (BWP). Put differently, the CORESET configuration defines the frequency resources for the search space set and thus for the comprised PDCCH candidates of search spaces in the set. The CORESET configuration also defines the duration of the search space set, which can have a length of one to three OFDM symbols. On the other hand, the start time is configured by the search space set configuration itself, e.g. at which OFDM symbol the UE starts monitoring the PDCCH of the search spaces of the set. In combination, the configuration of the search space set and the configuration of the CORESET provide an unambiguous definition in the frequency and time domain about the PDCCH monitoring requirements of the UE. Both CORESET and Search space set configurations can be semi-statically configured via RRC signalling.

The first CORESET, CORESET 0, is provided by the master information block (MIB) as part of the configuration of the initial bandwidth part to be able to receive the remaining system information and additional configuration information from the network. After connection setup, a UE can be configured with multiple, potentially overlapping, CORESETs using RRC signalling.

The network may define a common control region and UE specific control region. In NR, the number of CORESETs is limited to 3 per BWP including both common and UE-specific CORESETs. When exemplarily assuming that 4 BWPs are configurable for each serving cell, the maximum number of CORESETs per serving cell would be 12. Generally, the number of search spaces per BWP can be limited, e.g. to 10 as currently in NR, such that the maximum number of search spaces per BWP is 40. Each search space is associated with a CORESET.

The common CORESET is shared by multiple UEs in a cell, such that the network correspondingly needs to take care on alignment with all UEs for this configuration. The common CORESET can be used for Random Access, paging and system information.

In NR, a flexible slot format can be configured for a UE by cell-specific and/or UE-specific higher-layer signaling in a semi-static downlink/uplink assignment manner, or by dynamically signaling e.g. via DCI Format 2_0 in the group-common PDCCH (GC-PDCCH). When the dynamic signaling is configured, a UE is to monitor the GC-PDCCH (DCI format 2_0) that carries the dynamic slot format indication (SFI).

In general, one or more CORESETs including both common and UE-specific CORESETs may be configured per BWP (e.g. up to 3 CORESETS per BWP). Each CORESET can then have several search spaces in turn with respectively one or more PDCCH candidates a UE can monitor.

### Time-domain scheduling in 5G NR

In the time domain, transmissions in 5G NR are organized into frames of length 10ms, each of which is divided into 10 equally sized subframes of length 1ms. A subframe in turn is divided into slots consisting of 14 OFDM symbols each. The duration of a slot in milliseconds depends on the numerology. For instance, for the 15kHz subcarrier spacing, an NR slot thus has the same structure as an LTE subframe with normal cyclic prefix. A subframe in NR serves as a numerology-independent time reference, which is useful, especially in the case of multiple numerologies being mixed on the same carrier, while a slot is the typical dynamic scheduling unit.

In the following, time-domain resource allocation as currently implemented in the 3GPP technical specifications will be presented. The following explanations are to be understood as a particular exemplary implementation of the time-domain resource allocation and should not be understood as the only possible time-domain resource allocation possible. On the contrary, the present disclosure and solutions apply in a corresponding manner to different implementations of the time-domain resource allocation that could be implemented in the future. For instance, whereas the following TDRA tables are based on particular parameters (e.g. 5 parameters), the time-domain resource allocation may also be based on a different number of parameters and/or different parameters.

The time-domain allocation for the data to be received or transmitted is dynamically signaled in the DCI, which is useful because the part of a slot available for downlink reception or uplink transmission may vary from slot to slot as a result of the use of dynamic TDD or the amount of resources used for uplink control signaling. The slot in which the transmission occurs is signaled as part of the time-domain allocation. Although the downlink data in many cases is transmitted in the same slot as the corresponding resource assignment, this is frequently not the case for uplink transmissions.

When the UE is scheduled to receive PDSCH or transmit PUSCH by a DCI, the Time Domain Resource Assignment (TDRA) field value of the DCI indicates a row index of a time-domain resource allocation (TDRA) table. The term "table" is used herein, because the TDRA entries are presented as a table in the corresponding 3GPP technical specifications, but should be interpreted as a logical and rather non-restrictive term. In particular, the present disclosure is not limited to any particular organization, and the TDRA table may be implemented in any manner as a set of parameters associated with the respective entry indices.

For instance, the row of the TDRA table indexed by the DCI defines several parameters that can be used for the allocation of the radio resources in the time domain. In the present example, the TDRA table can indicate the slot offset K0/K2, the start and length indicator SLIV, or directly the start symbol S and the allocation length L. Furthermore, the TDRA table may also indicated the PDSCH mapping type to be assumed in the PDSCH reception and the dmrs-TypeA-Position, parameters that are not directly relating to the scheduled time-domain radio resources. The time-domain allocation field in the DCI is used as an index into this table from which the actual time-domain allocation is then obtained. In such an exemplary implementation, the DCI indication of a row of a TDRA table (one value of the row index) thus corresponds to an indication of a combination of specific values of dmrs-TypeA-Position, PDSCH mapping type, K0 value, S value, and/or L value.

There is one table for uplink scheduling grants and one table for downlink scheduling assignments. For example, 16 rows can be configured where each row contains:
- a slot offset (K0, K2), which is the slot relative to the one where the DCI was obtained. At present, downlink slot offsets from 0 to 3 are possible, while for the uplink slot offsets from 0 to 7 can be used. The slot offset can also be termed as a gap (e.g. time gap or slot gap) between the slot of the PDCCH (including the K0/K2) and the slot of the corresponding PDSCH, scheduled by the PDCCH, as a number of slots.

- The first OFDM symbol in the slot where the data is transmitted.
- The duration of the transmission in number of OFDM symbols in the slot. Not all combinations of start and length fit within one slot. Therefore, the start and length are jointly encoded to cover only the valid combinations.
- For the downlink, the PDSCH mapping type, i.e. the DMRS location is also part of the table. This provides more flexibility compared to separately indicating the mapping type.

It is also possible to configure slot aggregation, i.e. a transmission where the same transport block is repeated across up to 8 slots.

The current 3GPP standard TS 38.214 v16.0.0, for instance section 5.1.2 for DL and section 6.1.2 for UL, relates to the time-domain scheduling and provides several default tables that can be used in said respect, e.g. when no RRC-configured tables (e.g. pdsch-TimeDomainAllocationList in either pdsch-ConfigCommon or pdsch-Config) are available at the UE. Once these fields (e.g. pdsch-AllocationList) are defined in an RRC message, which elements are used for each PDSCH scheduling is determined by the field called time domain resource assignment (e.g. in DCI 1_0 and DCI 1_1).

In the following a default PDSCH time domain resource allocation A for normal cyclic prefix is presented.

**Table 5.1.2.1.1-2: Default PDSCH time domain resource allocation A for normal CP**

| **Row index** | ***dmrs-TypeA-Position*** | **PDSCH mapping type** | ***K₀*** | ***S*** | ***L*** |
|---|---|---|---|---|---|
| 1 | 2 | Type A | 0 | 2 | 12 |
| | 3 | Type A | 0 | 3 | 11 |
| 2 | 2 | Type A | 0 | 2 | 10 |
| | 3 | Type A | 0 | 3 | 9 |
| 3 | 2 | Type A | 0 | 2 | 9 |
| | 3 | Type A | 0 | 3 | 8 |
| 4 | 2 | Type A | 0 | 2 | 7 |
| | 3 | Type A | 0 | 3 | 6 |
| 5 | 2 | Type A | 0 | 2 | 5 |
| | 3 | Type A | 0 | 3 | 4 |
| 6 | 2 | Type B | 0 | 9 | 4 |
| | 3 | Type B | 0 | 10 | 4 |
| 7 | 2 | Type B | 0 | 4 | 4 |
| | 3 | Type B | 0 | 6 | 4 |
| 8 | 2,3 | Type B | 0 | 5 | 7 |
| 9 | 2,3 | Type B | 0 | 5 | 2 |
| 10 | 2,3 | Type B | 0 | 9 | 2 |
| 11 | 2,3 | Type B | 0 | 12 | 2 |
| 12 | 2,3 | Type A | 0 | 1 | 13 |
| 13 | 2,3 | Type A | 0 | 1 | 6 |
| 14 | 2,3 | Type A | 0 | 2 | 4 |
| 15 | 2,3 | Type B | 0 | 4 | 7 |
| 16 | 2,3 | Type B | 0 | 8 | 4 |

As apparent therefrom, the K0 value is always assumed to be 0, in practice applying a same-slot downlink scheduling.

In the following a default PUSCH time domain resource allocation A for normal cyclic prefix is presented.

**Table 6.1.2.1.1-2: Default PUSCH time domain resource allocation A for normal CP**

| **Row index** | **PUSCH mapping type** | ***K*₂** | ***S*** | ***L*** |
|---|---|---|---|---|
| 1 | Type A | *j* | 0 | 14 |
| 2 | Type A | *j* | 0 | 12 |
| 3 | Type A | *j* | 0 | 10 |
| 4 | Type B | *j* | 2 | 10 |
| 5 | Type B | *j* | 4 | 10 |
| 6 | Type B | *j* | 4 | 8 |
| 7 | Type B | *j* | 4 | 6 |
| 8 | Type A | *j*+1 | 0 | 14 |
| 9 | Type A | *j*+1 | 0 | 12 |
| 10 | Type A | *j*+1 | 0 | 10 |
| 11 | Type A | *j*+2 | 0 | 14 |
| 12 | Type A | *j*+2 | 0 | 12 |
| 13 | Type A | *j*+2 | 0 | 10 |
| 14 | Type B | *j* | 8 | 6 |
| 15 | Type A | *j*+3 | 0 | 14 |
| 16 | Type A | *j*+3 | 0 | 10 |

As apparent therefrom, the K2 value is in turn dependent on the parameter j, which is given by the following table.

**Table 6.1.2.1.1-4: Definition of value j**

| ***µ_{PUSCH}*** | *J* |
|---|---|
| 0 | 1 |
| 1 | 1 |
| 2 | 2 |
| 3 | 3 |

The parameter µPUSCH is the subcarrier spacing configurations for PUSCH.

As apparent from the above, the PUSCH and PDSCH TDRA tables are based on common parameters, such as the PUSCH mapping type, K0/K2 value, the S value and the L value. K0 is the slot offset between the scheduling PDCCH and the scheduled PDSCH, i.e. for DL scheduling. K2 is the slot offset between the scheduling PDCCH and the scheduled PUSCH, i.e. for UL scheduling. The S value of the TDRA table may indicate the position of the starting symbol of the scheduled resources in the relevant slot (which is the slot in which the scheduled resources are to be received/transmitted, given by K0/K2). The L value of the TDRA table may indicate the length of the PDSCH/PUSCH in terms/units of symbols and/or the length of the scheduled resource in terms/units of symbols.

In the following an example for a RRC-configured TDRA table for the PDSCH is provided, where the parameter K0 varies between 0 and 4 slots.

| **Row index** | ***dmrs-TypeA-Position*** | **PDSCH mapping type** | ***K₀*** | ***S*** | ***L*** |
|---|---|---|---|---|---|
| 1 | 2 | Type A | 0 | 2 | 12 |
| | 3 | Type A | 0 | 3 | 11 |
| 2 | 2 | Type A | 0 | 2 | 10 |
| | 3 | Type A | 0 | 3 | 9 |
| 3 | 2 | Type A | 0 | 2 | 9 |
| | 3 | Type A | 1 | 3 | 8 |
| 4 | 2 | Type A | 1 | 2 | 7 |
| | 3 | Type A | 1 | 3 | 6 |
| 5 | 2 | Type A | 1 | 2 | 5 |
| | 3 | Type A | 1 | 3 | 4 |
| 6 | 2 | Type B | 2 | 9 | 4 |
| | 3 | Type B | 2 | 10 | 4 |
| 7 | 2 | Type B | 2 | 4 | 4 |
| | 3 | Type B | 2 | 6 | 4 |
| 8 | 2,3 | Type B | 2 | 5 | 7 |
| 9 | 2,3 | Type B | 3 | 5 | 2 |
| 10 | 2,3 | Type B | 3 | 9 | 2 |
| 11 | 2,3 | Type B | 3 | 12 | 2 |
| 12 | 2,3 | Type A | 3 | 1 | 13 |
| 13 | 2,3 | Type A | 4 | 1 | 6 |
| 14 | 2,3 | Type A | 4 | 2 | 4 |
| 15 | 2,3 | Type B | 4 | 4 | 7 |
| 16 | 2,3 | Type B | 4 | 8 | 4 |

Correspondingly, the RRC-configured TDRA table allows for K0 values of up to 4 time slots, thus effectively allowing same-slot as well as cross-slot scheduling (i.e. DCI and corresponding resource allocation in different time slots).

In the current 5G-specific exemplary implementations, a configured TDRA table is signaled within PDSCH-related configuration via RRC (e.g. the information element PDSCH-Config, of 3GPP TS 38.331 v15.9.0), which in turn may be within an information element pertaining to a Bandwidth Part ((BWP)-DownlinkDedicated). Therefore, if the TDRA table is higher-layer configured, the TDRA table may be BWP-specific. A communication device may use a default table or may apply the higher-layer-configured TDRA table (termed pdsch-TimeDomainAllocationList in either pdsch-ConfigCommon or pdsch-Config). However, this is only one possible example of interaction between TDRA configuration and BWP concept of NR. The present invention does not presuppose employing BWP and is not limited to resource allocation using TDRA tables.

### Downlink control channel monitoring, PDCCH, DCI

Many of the functions operated by the UE involve the monitoring of a downlink control channel (e.g. the PDCCH, see 3GPP TS 38.300 v15.6.0, section 5.2.3) to receive e.g. particular control information or data destined to the UE.

A non-exhaustive list of these functions is given in the following:
- • a paging message monitoring function,
- • a system information acquisition function,
- • signalling monitoring operation for a Discontinued Reception, DRX, function,
- • inactivity monitoring operation for a Discontinued Reception, DRX, function,
- • random access response reception for a random access function,
- • reordering function of a Packet Data Convergence Protocol, PDCP, layer.

As mentioned above, the PDCCH monitoring is done by the UE so as to identify and receive information intended for the UE, such as the control information as well as the user traffic (e.g. the DCI on the PDCCH, and the user data on the PDSCH indicated by the PDCCH).

Control information in the downlink (can be termed downlink control information, DCI) has the same purpose in 5G NR as the DCI in LTE, namely being a special set of control information that e.g. schedules a downlink data channel (e.g. the PDSCH) or an uplink data channel (e.g. PUSCH). In 5G NR there are a number of different DCI Formats defined already (see TS 38.212 v15.6.0 section 7.3.1).

Said DCI formats represent predetermined formats in which respective information is formed and transmitted. In particular, DCI formats 0_1 and 1_1 are used for scheduling PUSCH and PDSCH, respectively, in one cell.

The PDCCH monitoring of each of these functions serves a particular purpose and is thus started to said end. The PDCCH monitoring is typically controlled at least based on a timer, operated by the UE. The timer has the purpose of controlling the PDCCH monitoring, e.g. limiting the maximum amount of time that the UE is to monitor the PDCCH. For instance, the UE may not need to indefinitely monitor the PDCCH, but may stop the monitoring after some time so as to be able to save power.

As mentioned above, one of the purposes of DCI on the PDCCH is the dynamic scheduling of resources in downlink or uplink or even sidelink. In particular, some formats of DCI are provided to carry indication of resources (resource allocation, RA) allocated to a data channel for a particular user. The resource allocation may include specification of resources in frequency domain and/or time domain.

### Terminal and Base Station

A terminal or user terminal, or user device is referred to in the LTE and NR as a user equipment (UE). This may be a mobile device or communication apparatus such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a mobile station or mobile node or user terminal or UE is a physical entity (physical node) within a communication network. Still further, the communication device may be any machine-type communication device, such as loT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

A base station is a network node, e.g. forming a part of the network for providing services to terminals. A base station is a network node or scheduling node, which provides wireless access to terminals. Communication between the terminal and the base station is typically standardized. In LTE and NR, the wireless interface protocol stack includes physical layer, medium access layer (MAC) and higher layers. In control plane, higher-layer protocol Radio Resource Control protocol is provided. Via RRC, the base station can control configuration of the terminals and terminals may communicate with the base station to perform control tasks such as connection and bearer establishment, modification, or the like, measurements, and other functions. The terminology used in LTE is eNB (or eNodeB), while the currently used terminology for 5G NR is gNB. The term "base station" or "radio base station" here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

### Terminology

In the following, UEs, base stations, and procedures will be described for the new radio access technology envisioned for the 5G mobile communication systems, but which may also be used in LTE mobile communication systems. Different implementations and variants will be explained as well. The following disclosure was facilitated by the discussions and findings as described above and may for example be based at least on part thereof.

In general, it should be noted that many assumptions have been made herein so as to be able to explain the principles underlying the present disclosure in a clear and understandable manner. These assumptions are however to be understood as merely examples made herein for illustration purposes that should not limit the scope of the disclosure.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next 3GPP 5G communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure.

### Power Saving Possibilities

The inventors have identified possibilities to save power at the UE and, thus, to increase battery lifetime of UEs, in particular for reduced capability NR devices (e.g., in support of the Rel. 17). In particular, UE power consumption may be saved in applicable use cases (e.g. delay tolerant) by i) reducing PDCCH monitoring, e.g., by having a smaller numbers of blind decodes and/or CCE limits; ii) extending DRX for RRC Inactive State, Idle state, and/or connected state; and iii) relaxing RRM for stationary devices

A possibility to save power at the UE may be to improve the PDCCH monitoring and scheduling. In particular, for a UE with frequent traffic in RRC CONNECTED mode, PDCCH-only still represents a large portion of the UE's power consumption. Thus, since the PDCCH-only slots without PDSCH/PUSCH scheduling may take a large portion of the total power consumption, reducing the number of PDCCH-only slots may facilitate to substantially reduce the power consumption of UEs. Power consumption may further be reduced by also scheduling, with said DCI, transmission and/or reception of repetitions of one or more (or all) of the TBs that are scheduled by said DCI.

It is noted that, when certain service requirement, e.g. throughput, have to be met with respect for a certain UE/service, multiple TB scheduling may be particularly suitable/efficient in case of service types that are not so sensitive to latency. In such cases the gNB may perform scheduling prediction, which may allow to put the slots to better use by scheduling, in one DCI, more than one TB in multiple upcoming slots.

For Reduce Capability UE, the coverage recovery may also be an important aspect. The data channel scheduling with repetition may be beneficial for coverage enhancement due to certain cost/complexity reduction, e.g. Rx/Tx antenna reduction. Multiple TB scheduling may allow for further power consumption reduction in interaction with PDCCH monitoring reduction/adaptation, UL cancellation, and/or DL pre-emption, as further explained below.

### Cancellation Indication (CI) of transmissions in UUDL and Priority Indication

At this point it should be noted that, in the following, a Cancellation Indication (CI) may in general be an UL CI or a DL Pre-emption Indication (PI). In case of PUSCH/PDSCH repetitions, UL CI /DL PI may be applied to each repetition individually (actual repetition in case of PUSCH repetition type B). That is, repetitions that overlap (in time and frequency) with the resource indicated by UL CI /DL PI may be cancelled/pre-empted (as e.g., in Rel.16 NR URLLC).

Furthermore, in particular to control the cancelation behavior of UEs, a priority indicator may be introduced. For instance, the priority indicator may be indicated in DCI formats 0_1, 0_2, 1_1, and/or 1_2, as, e.g., in Rel.16 NR. There may be two or more UE behaviors (e.g., two or more cancellation rules) when both UL CI /DL PI and intra-UE priority indicator are configured for a given UE. For instance, according to a first behaviour, UL CI /DL PI may only be applicable to the UL/DL transmissions indicated/configured as low priority level; and, according to a second behaviour UL CI /DL PI may be applicable to UL/DL transmission irrespective of its priority level. Which of the two or more configured behaviors a UE should follow may be indicated/configured, e.g., my means of RRC. More specifically, a UE may receive, via RRC, an indication indicating one behavior among the two or more configured behaviors. Based on this indication, the UE may determine the indicated behavior. Moreover, the UE may use (e.g., until receiving, via RRC, another indication indicating a behavior) the indicated/determined behavior for determining the transmissions that are cancelled by subsequently received CIs.

In general, a multiple TB scheduling DCI may efficiently schedule resource for a long duration. However, the long-duration multiple TB transmission may block some higher priority traffic in future. In other words, after scheduling multiple TBs with a multiple TB scheduling DCI, it may turn out that some of the resources scheduled by said DCI are needed for other traffic, e.g., traffic of higher priority.

In view of this, the inventors have identified possibilities for efficient CI/PI for cancellation if multiple TB scheduling framework. Furthermore, the inventors have identified possibilities for efficiently indicating the priorities of multiple TBs. The following embodiments, apply to both UL CIs and DL PIs, corresponding to UL cancellation and DL pre-emption, respectively.

### Embodiments

The present disclosure provides techniques for multiple TB scheduling with and without repetition which may facilitate power saving of UEs. In particular, the present disclosure addresses the signaling support and framework design for multiple TB scheduling with and without repetition. Furthermore, the present disclosure provides a framework that may enable dynamic multiple TB scheduling with and without repetition. Furthermore, the present disclosure provides techniques for efficient cancellation of one or more of the transmissions scheduled by a multiple TB scheduling DCI. Moreover, the present disclosure provides techniques that may facilitate indicating efficiently the priorities of TBs scheduled by a multiple TB scheduling DCI.

Since the present disclosure relates to scheduling, both entities, a scheduled device (typically communication device/transceiver device) and scheduling device (typically network node) take part. Accordingly, the present disclosure provides a base station and a user equipment. As illustrated in **Fig. 6****,** user equipment 610 and base station 660 may communicate with each other over a wireless channel in a wireless communication system. For instance, the user equipment may be a NR user equipment, and the base station may be a network node or scheduling node such as a NR gNB, in particular a gNB in a Non-Terrestrial Network (NTN) NR system.

The present disclosure further provides a system including a scheduled and scheduling device, as well as a corresponding methods and programs An example of such communication system is illustrated in **Fig. 6****.** The communication system 600 may be a wireless communication system in accordance with the technical specifications of 5G, in particular a NR communication system. However, the present disclosure is not limited to 3GPP NR and may also be applied to other wireless or cellular systems such as NTNs.

Fig. 6 illustrates a general, simplified and exemplary block diagram of a user equipment 610 (also termed communication device) and a scheduling device 660 which is here exemplarily assumed to be located in the base station (network node) e.g. the eNB or gNB. However, in general, a scheduling device may also be a terminal in case of a sidelink connection between two terminals. Moreover, in particular with respect to the use cases of URLLC; eMBB, and mMTC, the communication device 610 may also be a sensor device, a wearable device, or a connected vehicle, or a controller of an automated machine in an industrial factory. Further, a communication device 610 may be able to function as a relay between base station 660 and another communication device (e.g. the disclosure is not limited to communication "terminals" or user "terminals").

The UE and eNB/gNB are communicating with each other over a (wireless) physical channel 650 respectively using their transceivers 620 (UE side) and 670 (base station side). Together, the base station 660 and the terminal 610 form the communication system 600. The communication system 600 may further include other entities such as those shown in Fig. 1.

As shown in Fig. 6, in some embodiments, the user equipment (UE) 610 comprises a transceiver 620 which, in operation, receives downlink control information (DCI) signaling (in the present disclosure, also referred to as a multiple TB scheduling DCI). Furthermore, the transceiver, in operation, receives control information. The UE further comprises circuitry 630, 635 which, in operation, obtains, from the DCI signaling, a scheduling indication. For instance, the UE may obtain the scheduling indication from the DCI by parsing the DCI and/or extracting, form the DCI, said scheduling indication. The scheduling indication indicates, for each of a plurality of transport blocks, TBs, scheduling of one or more transmissions of said TB. For instance, the scheduling indication may indicate scheduling of a number N of transport blocks, TBs, wherein N is an integer greater than one. Furthermore, the circuitry may obtain, from the control information, a cancellation indication (CI) indicating a resource. Moreover, the circuitry may determine, based on the indicated resource and a predetermined rule (cancellation rule), which of the scheduled transmissions of the plurality of TBs are cancelled.

As also shown in Fig. 6, in some embodiments, the base station/scheduling device 660 comprises circuitry 680, 685. The circuitry 680, 685, in operation, generates downlink control information (DCI) signaling (in the present disclosure also referred to as a multiple TB scheduling DCI). The DCI signaling may include a scheduling indication indicating, for each of a plurality of transport blocks, TBs, scheduling of one or more transmissions of said TB. For instance, the DCI signaling may include a scheduling indication indicating to a UE scheduling of a number N of transport blocks, TBs, wherein N is an integer greater than one. Furthermore, the circuitry 680, 685may determine which of the scheduled transmissions of the plurality of TBs are to be cancelled. Moreover, the circuitry 680, 685 may determine a resource that indicates, based on a predetermined rule (cancellation rule), the determined scheduled transmissions that are to be cancelled, and generate control information that includes a cancellation indication (CI) that indicates said resource. The base station 660 may further comprises a transceiver which, in operation, transmits the DCI signaling and the control information.

It is further noted that the communication device 610 may comprise the transceiver 620 and a (processing) circuitry 630, and the scheduling device 660 may comprise the transceiver 670 and a (processing) circuitry 680. The transceiver 610 in turn may comprise and/or function as a receiver and/or a transmitter. In this disclosure, in other words, the term "transceiver" is used for hardware and software components that allow the communication device 610, or, respectively base station 660 to transmit and/or receive radio signals over a wireless channel 650. Accordingly, a transceiver corresponds to a receiver, a transmitter, or a combination of receiver and transmitter. Typically, a base station and a communication device are assumed to be capable of transmitting as well as receiving radio signals. However, particularly with respect to some applications of eMBB, mMTC and URLLC (smart home, smart city, industry automation etc.), cases are conceivable in which a device, such as a sensor, only receives signals. Moreover, the term "circuitry" includes processing circuitry formed by one or more processors or processing units, etc.

The circuitries 630, 680 (or processing circuitries) may be one or more pieces of hardware such as one or more processors or any LSIs. Between the transceiver and the processing circuitry there is an input/output point (or node) over which the processing circuitry, when in operation, can control the transceiver, i.e. control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data that is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto.

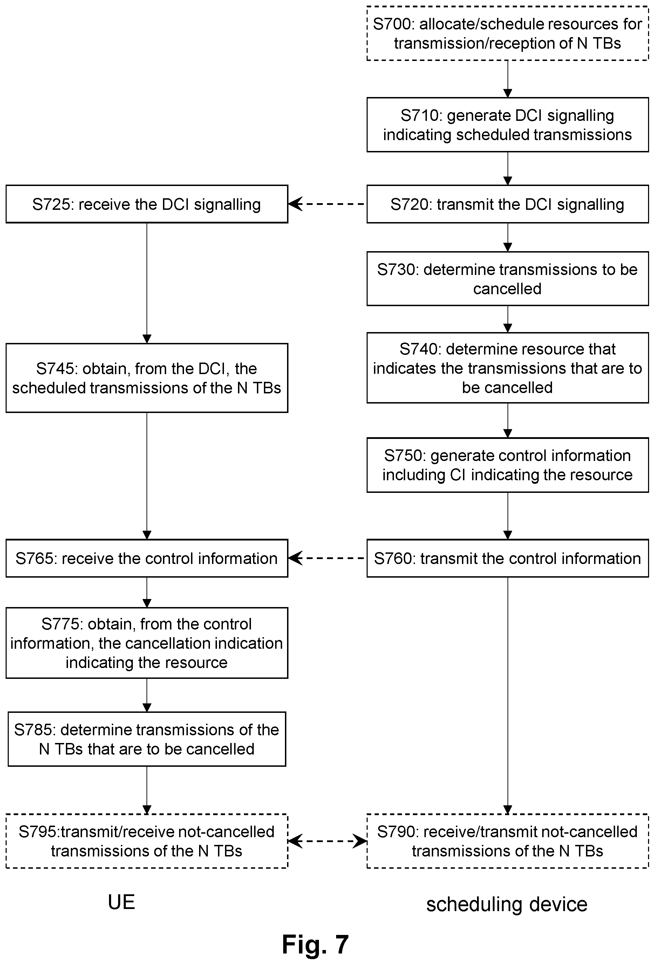

In correspondence with the above described UE 610, a communication method to be performed by a UE is provided. As shown on the left-hand side of **Fig. 7**, the method comprises a step of receiving S725 DCI signaling (in the present disclosure also referred to as a multiple TB scheduling DCI), and a step of obtaining S745, from said DCI signaling, a scheduling indication. For instance, the scheduling indication may be obtained, from the DCI, by parsing the DCI and/or extracting, from the DCI, said scheduling indication. The scheduling indication indicates, for each of a plurality of TBs scheduling of one or more transmissions of said TB. In other words, the scheduling indication may indicate i) scheduling of a number N of transport blocks, TBs, wherein N is an integer greater than one, and ii) a number M of repetitions of the N TBs, wherein M is equal to or greater than one. Furthermore, the method comprises a step of receiving S765 control information, and a step of obtaining S775, from the control information, a CI indicating a resource. Moreover, the method comprises a step of determining S785, based on the indicated resource and a predetermined rule (cancellation rule), which of the scheduled transmissions of the plurality of TBs are cancelled.

As further shown in **Fig. 7**, the UE may transmit S795 and/or receive S795, in accordance with the scheduling indication obtained from the DCI/PDCCH and the CI, obtained from the control information, the transport blocks that are scheduled by the DCI but not cancelled by the CI.

It is further noted that, in Fig. 7, the transmissions/receptions S795 of the N TBs are shown to take place strictly after the reception S765 of the CI, the obtaining S775 of the control information, and the determination S785 of the transmissions to be cancelled. However, the present invention is not limited thereto. In general, the receiving S765, the obtaining S775, and/or the determining S785 may be performed after some of the scheduled transmissions of the N TBs have already been transmitted/received S795 by the UE. In particular, steps S765, S775, and/or S785 may be performed during step S795, i.e., after some - but not all, of the scheduled transmission of the N TBs have been performed. In this case, only transmissions that have not yet been transmitted/received may be cancelled. In particular, in the determining S785, the UE may decide (i.e., the cancellation rule may specify) that all scheduled transmissions that have already been transmitted/received are not cancelled.

Furthermore, in correspondence with the above described base station, a communication method to be performed by a base station (or scheduling device) is provided. As shown on the right-hand side of **Fig. 7**, the method comprises a step of generating S710 a DCI signaling (in the present disclosure also referred to as a multiple TB scheduling DCI), and a step of transmitting S720 the generated DCI signaling. The DCI signaling includes a scheduling indication indicating, for each of a plurality of transport blocks, TBs, scheduling of one or more transmissions of said TB. In other words, the scheduling indication may indicate, to a UE, i) scheduling of a number N of TBs, wherein N is an integer greater than one, and ii) scheduling of a number M of transmissions/repetitions of the N TBs, wherein M is equal to or greater than one. Furthermore, the method includes a step of determining S730 which of the scheduled transmissions of the plurality of TBs are to be cancelled. For instance, a base station may determine that transmissions are to be cancelled when the traffic condition since the scheduling of the transmissions have changed. In general, transmissions may be cancelled when the resources scheduled for said transmissions can be used more efficiently for other transmissions (of the same or another UE). In particular, the base station, when determining that, if and which transmissions are to be cancelled may take into account other UEs, QOS requirements of already scheduled transmissions as well as QOS requirements of transmissions that could be scheduled if resources were available.

Moreover, the method includes a step of determining S740 a resource that indicates, based on a predetermined rule (in the present disclosure, also referred to as cancellation rule), the determined scheduled transmissions that are to be cancelled; a step of generating S750 control information that includes a cancellation indication (CI) indicating the resource; and a step of transmitting S760 the control information.

As illustrated in Fig. 7, the base station method may also perform step S700, and the method for the base station may include said step 700. In step 700, which is performed before the generation of the multiple TB scheduling DCI in step S710, the base station performs allocation/scheduling of time-domain resources for transmission and/or reception of the N transport blocks. This scheduling may include a step of determining to indicate scheduling of multiple (e.g. N>1) TBs to one or more UEs. Step 700 may in general performed jointly with scheduling of resources for other transmission/receptions also of other UEs as well as in consideration of traffic conditions and quality requirements of services used by one or more UEs. As further shown in **Fig. 7**, the scheduling device may receive S790 and/or transmit S790, in accordance with the scheduling of the DCI/PDCCH and the CI, the scheduled transport blocks that are not cancelled.

It is further noted that, in Fig. 7, the receptions/transmissions S790 of the N TBs are shown to take place strictly after the transmission S760 of the CI, the generating S750 of the control information, the determining S740 of the resource, and the determining S720 of the transmissions that are to be cancelled. However, the present invention is not limited thereto. In general, the determination 730 as well as the subsequent steps S740, S750, and/or S760 may be performed may be performed after some of the scheduled transmissions of the N TBs have already been transmitted/received S790 by the scheduling device.

It is further noted that any of the steps/operations described below may be performed or controlled by the circuitry 630 (on the UE side) and/or the circuitry 680 (on the base station side).

In the further description, the details and embodiments apply to each of the transceiver device, the scheduling device (or scheduling nodes) and the methods unless explicit statement or context indicates otherwise. In particular, the UE and the base station may use the same cancellation rule according to which the resource indicated by the CI indicates the transmissions to be cancelled.

### Multiple TB scheduling DCI

In general, a DCI (or DCI signalling) may schedule multiple TBs. In other words, multiple TB transmission with and without repetition may be scheduled by a (single, or one) DCI. In the present disclosure, such a DCI is also referred to as a **multiple TB scheduling DCI.** More specifically, a multiple TB scheduling DCI indicates (to the same UE) scheduling of multiple TBs. Likewise, the term "***multiple TB scheduling***" refers to scheduling of multiple TBs with a single (or one) DCI to the same UE. In other words, a multiple TB scheduling DCI may include a scheduling indication that indicates (to the same UE) scheduling of multiple TBs.

In general, the **scheduling indication**, included in the multiple TB scheduling DCI, indicates scheduling of a number N of transport blocks. That is, the scheduling indication, may indicate, for each TB of N TBs, one or more transmissions of said TB. Furthermore, the scheduling indication may indicate, for each transmission it (i.e., the scheduling indication) indicates, a resource for said transmission.

The multiple TB scheduling DCI (the included scheduling indication) may further indicate, to said UE, at least one of (one, two, three, or even all four of) i) the number N of TBs (N being an integer greater than one), ii) a number M of repetitions of the TBs (M being equal to or greater than one), iii) a transmission gap (e.g., a transmissions gap between the N TBs), and iv) an interleaving pattern. It is further noted that, in the present disclosure, the term "TBs scheduled the multiple scheduling DCI" and the term "N TBs" are used interchangeably.

It is further noted that the **number N** is in general a non-negative integer (or natural number) greater than 1. Furthermore, the number/amount of mutually different TBs that are scheduled by the multiple TB scheduling DCI may be N.

In other words, a multiple TB scheduling DCI (e.g. a scheduling indication included in said multiple TB scheduling DCI) may include i) an indication indicating the number N of TBs, ii) an indication indicating the number M of repetitions of the TBs, iii) an indication indicating a transmission gap, and iv) an indication indicating an interleaving pattern. It is noted that an indication of the number N of TBs may implicitly indicate scheduling of N TBs, and an indication of the M repetitions may implicitly indicate scheduling of M repetitions of the TBs. More specifically, an indication of the number N in a multiple TB scheduling DCI may also indicate scheduling of N TBs. In other words, the indication of the number N may be considered a joint indication of the number N and the scheduling of N TBs. Likewise, an indication of the number M in a multiple TB scheduling DCI may also indicate scheduling of M repetitions. In other words, the indication of the number M may be considered a joint indication of the number M and the scheduling of M repetitions. It is also noted that the interleaving pattern may implicitly indicate the scheduling of N TBs, or scheduling of M repetitions of the TBs, or both.

In general, the scheduling indication in the multiple TB scheduling DCI may be an explicit indication (e.g., a bit field in the DCI for indicating the number N of TB and/or the number M of repetitions), or e.g., a joint indication with, e.g., an entry of a TDRA table (such a TDRA table may contain multiple entries that specify different combinations of number of TBs and repetitions). In particular, the indication indicating the scheduling of the N TBs may jointly indicate the scheduling of the N TBs and at least one of i) the scheduling of the M repetitions; ii) the interleaving pattern; and iii) the transmission gap. Such a joint scheduling indication may reduce overhead.

### Scheduling of the Multiple TB scheduling DCI

In general, the indication indicating the scheduling of the N TBs may include an indication of the number N. In other words, the multiple TB scheduling DCI (e.g., the scheduling indication) may in general include an indication of the **number N** of scheduled TBs. The indication of the number N may be explicit or implicit.

However, the present invention is not limited thereto. That is, the scheduling of N TBs by a multiple TB scheduling DCI does not require that said multiple TB scheduling DCI does include an explicit indication of the number N of scheduled TBs. In other words, a multiple TB scheduling DCI may or may not include an indication indicating the number N of scheduled TBs. For instance, in some embodiments, the UE (e.g., its transceiver) is configured to receive a Radio Resource Control (RRC) signaling. In these embodiments, the UE (e.g., its processing circuitry), in operation, then obtains, from the received RRC signaling, an indication indicating the number N of TBs.

Likewise, the indication indicating the scheduling of the **M repetitions** of the TBs may in general include an indication of the number M. In other words, the Multiple TB scheduling DCI (e.g., the scheduling indication) may in general include an indication of the number M of repetitions. The indication of the number M of repetitions may be explicit or implicit.

However, the present invention is not limited thereto. That is, the scheduling of the M repetitions by a multiple TB scheduling DCI does not require that said multiple TB scheduling DCI does include an explicit indication of the number M of scheduled TBs. In other words, a multiple TB scheduling DCI that schedules repetitions of the TBs may or may not include an indication indicating the number M of repetitions of the scheduled TBs. Similar to the number N of TBs, the number M of repetitions may be indicated via RRC.

In general, some multiple TB scheduling DCIs may explicitly indicate an N and/or M, whereas for the other multiple TB scheduling DCI it is implicitly understood that the current values of N and/or M applies (the last values of N/M explicitly indicated by a multiple TB scheduling DCI). Alternatively or in addition, N and/or M may be configured via RRC, and the multiple TB scheduling DCI may indicate the scheduling of the N transport blocks (and the M repetitions, if applicable) just by a trigger (e.g., a one-bit field in the DCI). That is, the number N of transport blocks, the number M of repetitions, the interleaving pattern, and the transmission gap may be indicated by other means, e.g., configured by RRC.

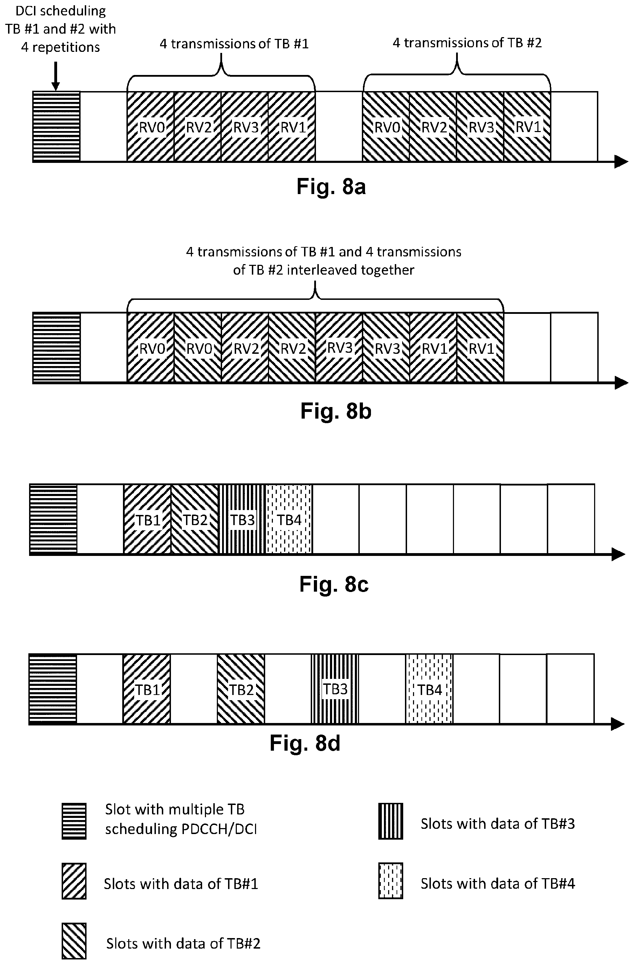

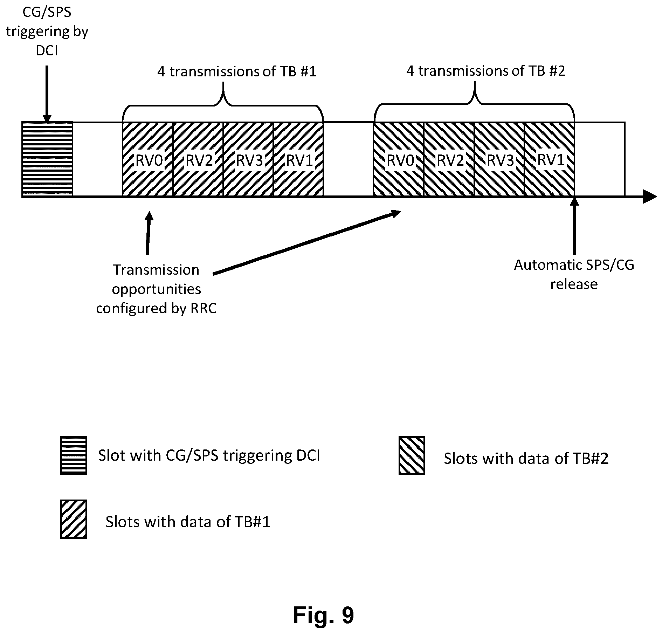

Moreover, a multiple TB scheduling DCI may in general schedule resources for the scheduled transmissions/repetitions of the multiple TBs. It is also noted that this scheduling of resources may be slot based (as illustrated in Fig. 8a to 8d, and Fig. 9) or non-slot based. In other words, multiple TB scheduling DCI may be slot-based multiple TB scheduling or may be non-slot based multiple TB scheduling. More specifically, slot based scheduling refers to scheduling of resources where all transmissions/repetitions of TBs are scheduled in granularity of slots. In other words, for each scheduled TB transmission/repetition, all time domain resources of one or more respective slots are used (e.g., each transmission/repetition uses one or more whole/entire slots). Non-slot based scheduling, on the other hand, refers to scheduling where the time-domain resources scheduled for a TB or its repetition is less than a slot, e.g. 1, 2 or several OFDM symbols. In particular, non-slot based scheduling may schedule multiple transmission/repetitions of TBs in a same slot.

It should further be noted that, in the present disclosure, statements of the form *"the DCI schedules", "the DCI indicates scheduling", "the DCI includes an indication indicating scheduling"*, and the like are used interchangeably. Furthermore, statements of the form *"schedules transmission of multiple TBs", "schedules transmission and*/*or reception of multiple TBs"* and *"schedules multiple TBs"* and the like are used interchangeably.

It is further noted that the scheduling of the N TBs (and the M repetitions, if applicable) may be a scheduling of transmission in the Uplink (UL, e.g., PUSCH) or in the Downlink (DL, e.g., PDSCH). In other words, the TBs scheduled by a multiple TB scheduling DCI may be scheduled for transmission or for reception by the UE (and, correspondingly, for reception or for transmission by the base station). In yet other words, if not explicitly stated otherwise, the term *"transmission"* refers to a transmission by the UE or a transmission by the base station, and the term *"reception"* refers to a reception by the UE or a reception by the base station.

Moreover, it is noted that the resources to be used for transmissions/reception of the scheduling N TBs (and the M repetitions, if applicable) may or may not be indicated (explicitly or implicitly) by said multiple TB scheduling DCI. For instance, using the SPS/CG framework, said resources may be indicated via RRC.

### Transport Blocks (TBs) and Repetitions

In general, the N TBs may carry mutually different data.

It is noted that the term "*transport block*" may also be replaced by the term "*codeword*", in particular as used for instance in the context of MIMO. More specifically, the term codeword is currently often used in MIMO for describing one or more codewords, each of which can be scheduled and then mapped to one or more/multiple spatial layers. In terms of the channel encoding and modulation, as far as the present invention is concerned, the operations are not differentiated for transport blocks and codewords. In other words, the present disclosure also enables scheduling of multiple codewords by providing a multiple codeword scheduling DCI, which functions in a similar way as the multiple TB scheduling DCI (replacing the term "*transport block*" by the term "*codeword*")*.*

In general, each of the M repetitions may carry a same data as a corresponding TB of the N TBs. In other words, each of the M repetitions may correspond to one of the N TBs scheduled by the multiple TB scheduling DCI. A TB and the repetitions corresponding to said TB may in general carry the same data. However, a TB and a corresponding repetition are not necessarily identical. For instance, said same data may be coded differently in the TB and a corresponding repetitions. That is, the repetitions of a TB may be different Redundancy Versions (RV) of said TB. In general, M may be a number greater than or equal to one, where a repetition number M of one may mean/indicate that (only) one transmission is scheduled for one of the TBs, or may mean/indicate that (only) one transmission of each TB is scheduled (i.e., the first transmission of each TB is counted as one of the repetitions of said TB). In other words, M=1 may indicate that no repetitions are scheduled. In yet other words, the terms *"transmission"* and *"repetition"* are here used interchangeably. It is further noted that, in the present disclosure, the term *"further repetition"* refers to transmission(s) of a TB other than the first transmission of the TBs.

It should further be noted that the number M of repetitions may be the total number of repetitions/transmissions scheduled by the multiple TB scheduling DCI. However, the present invention is not limited thereto as the multiple TB scheduling DCI may schedule M repetitions of each of the N scheduled transport blocks (to a total of N times M repetitions). Alternatively, the DCI may schedule M repetitions only for one (e.g. the first) or some of the TBs (each second, or the like) and may transmit the other TBs only once. In general, the multiple TB scheduling DCI may indicate different numbers of repetitions for each of the scheduled TBs.

It should also be noted that the repetitions and transmissions mentioned in the present disclosure may be nominal repetition/transmission or actual repetition/transmission. Nominal repetition and actual repetition are a concept introduced in Rel.16 NR for PUSCH repetition Type B, with detailed explanations in TS38.214, Sec 6.1.2.1. More specifically, nominal repetitions/transmissions are the ones that are configured/scheduled/indicated as an intention based on the configured/scheduled/indicated resource. However, in general, some of the OFDM symbols assigned to a nominal repetition may be invalid and/or a nominal repetition may cross the boundary of a slot, which may break said nominal repetition. Accordingly, nominal repetitions/transmissions can further be split by the slot boundary or invalid OFDM symbols and then consequently consist of one or more actual repetitions.

### Transmission gap

In general, a multiple TB scheduling DCI (e.g., the scheduling indication) may indicate (e.g., include an indication of) a transmission gap. Here, a transmission gap refers to a gap in time (measured, e.g., in terms of slots or OFDM symbols) between successive transmissions of TBs and/or further repetitions. In other words, a transmission gap refers to a time period (resources in time domain) between two successive transmissions. Two successive transmissions/repetitions are two transmissions/repetitions between which the multiple TB scheduling DCI does not schedule another transmission/repetition of one of the N scheduled TBs

This will now be further explained with reference to **Fig. 8c** and **Fig. 8d****.**

**Fig. 8c** shows an example of scheduling of multiple TBs without a transmission gap. As can be seen, in the first slot of Fig. 8c, the PDCCH including the multiple TB scheduling DCI is transmitted by the base station and/or received by the UE. Said multiple TB scheduling DCI schedules 4 TBs in the third to sixth slot, respectively. In other words, the multiple TB scheduling DCI schedules 4 TBs without transmission gap between said 4 scheduled TBs. That is to say, the 4TBs are scheduled for transmission in immediately successive slots.

**Fig. 8d** shows an example of scheduling of multiple TBs with a transmission gap. As in Fig. 8c, the multiple TB scheduling DCI is transmitted in the first slot. In particular, four TBs are scheduled every second slot starting from the third slot. That is, the first to fourth TB are scheduled for transmissions in slots #3, #5, #7, and #9, respectively. That is to say, the 4TBs are scheduled with a transmission of 1 slot between successive TBs.

It is further noted that, in general, different/multiple transmission gaps may be indicated by the multiple TB scheduling DCI. For instance, a first transmission gap may apply to two successive first transmissions of a TB, a second gap may apply to two successive further repetitions, a third gap may apply to a first transmission of a TB and a successive further repetition, and/or a fourth gap may apply to a further repetition and successive transmission of a TB.

### Interleaving patterns

In general, the interleaving pattern to be used for interleaving the two or more TBs scheduled by the multiple TB scheduling DCI may be selected from a predefined and/or predetermined set of interleaving patterns. In other words, one (e.g., which one) of a plurality of predefined and/or predetermined interleaving pattern may be indicated by the multiple TB scheduling DCI. For instance, these interleaving patterns may be configured via RRC signalling or be defined, e.g., in a standard.

The number N of TBs and/or the number M of repetitions may be implicitly indicated by the interleaving pattern. In other words, each interleaving pattern may be associated with a number N of TBs and/or a number M of repetitions. That is, by indicating an interleaving pattern, the multiple TB scheduling DCI implicitly indicates the associated number N of TBs and/or an associated number M of repetitions. Likewise, the transmission gap may be fixed by the interleaving pattern, i.e., an interleaving pattern may be associated with a specific transmission gap. These associations may in general by fixed or dynamic, e.g., configurable via RRC.

However, the present invention is not limited thereto. In general, the multiple TB scheduling DCI (e.g., the scheduling indication) may include an explicit indication of the transmission gap that can be determined and set, by the base station, independently of an interleaving pattern indicated in said DCI, thereby increasing the flexibility of the scheduling. This indication may be an explicit indication (e.g., a bit field in the DCI for indicating the gap), or e.g., a joint indication with the, e,g., interleaving pattern by reference to an entry of a TDRA table (such a TDRA table may contain multiple entries of a same interleaving pattern that specify different transmission gaps).

In general, the interleaving pattern may be selected from but not limited to two or more predefined interleaving pattern, e.g., the TB-first pattern and the RV first pattern further described below. In other words, the scheduling indication in the multiple TB scheduling DCI indicating a interleaving may indicate which of two or more predefined interleaving pattern is to be used for the scheduled TBs (and the scheduled further repetitions, if applicable).

Some exemplary interleaving patters are now described with reference to Fig. 8a to 8d.

**Fig. 8a** shows TB scheduling with repetition according to the *"TB-first pattern",* according to which the transmissions (including the repetitions) of the TBs are not interleaved. That is, Fig. 8a illustrates an interleaving pattern with trivial interleaving of the TBs.

Fig. 8a, as well as the subsequent Figs. 8b to 13b, illustrate a sequence of slots, wherein each box corresponds to a slot. In the figures, the multiple TB scheduling DCI is received in the first shown slot, i.e., the left-most slot, which is henceforth also referred to as slot #1. The following slot are labelled accordingly (slot #2, slot #3, ...). It is further noted that the arrows indicate the time-direction.

The TB-first interleaving pattern may (in case of two TBs) schematically be written as {TB0_RV0, TB0_RV2, TB0_RV3, TB0_RV1, TB1_RV0, TB1_RV2, TB1_RV3, TB1_RV1}, where the expression before the "_" indicates the transport block, and the expressions after the "_" the redundancy version. More specifically, as also shown in Fig. 8a, transmissions of two TBs is scheduled by the multiple TB scheduling DCI. Furthermore, for each of said two TBs, 4 repetitions are scheduled. Thus, each of the two scheduled TBs, is transmitted four times (possibly coded differently in said four times). The transmissions of the first TB are scheduled first in slots three to six. In particular, in the third slot the "0" redundancy version is transmitted, in the fourth slot the "2" redundancy version is transmitted, in the fifth slot the "3" redundancy version is transmitted, and in the third slot the "1" redundancy version is transmitted In the example shown in Fig. 8a, there is a transmission gap of one slot after the transmission of the first TB. The transmissions of the second TB are scheduled in slots eight to eleven, after the transmissions of the first TBs and the transmission gap. The redundancy version of the second TB are transmitted in the same order as the redundancy version of the first TB.

In general, in the TB-first pattern, the transmissions (including the repetitions) of a TB may be performed successively (e.g., in consecutive slots), i.e., without a transmission/repetition of another scheduled TBs between them. In general, there may or may not be a transmission gap between the transmission of a TB. Furthermore, there may or may not be a transmission gap between the last transmission of one TB and the first transmission of another TB. Some or all of these transmission gaps may be identical or mutually different.

The TB-first pattern may allow for a high reliability and low latency of the first TB transmission. It may be particularly beneficial to utilize the TB-first option, if the first TB has a distinguished higher priority and performance requirement than the second TB (and further TBs, if applicable).

**Fig. 8b** shows TB scheduling with repetition according to the *"RV first pattern",* according to which the transmissions (including the repetitions) of the TBs are interleaved. The TB-first interleaving pattern may schematically be written as {TB0_RV0, TB1_RV0, TB0_RV2, TB1_RV2, TB0_RV3, TB1_RV3, TB0_RV1, TB1_RV1}. More specifically, as also shown in Fig. 8b, transmissions of two TBs is scheduled by the multiple TB scheduling DCI. Furthermore, for each of said two TBs, 4 repetitions are scheduled. Thus, each of the two scheduled TBs, is transmitted four times (possibly coded differently in said four times).

The transmissions of the first TB are scheduled in every second slot starting from the third slot (slots #3, #5, #7, and #9).The transmissions of the second TB are scheduled in every second slot starting from the fourth slot (slots #4, #6, #8, and #10). That is, the transmission of the first and the second slot are interleaved.

In the first transmission of each TB (in slots #3, and #4) the "0" redundancy version of the respective TB is transmitted; in the second transmission of each TB, i.e., the first further repetition, (in slots #5, and #6) the "2" redundancy version of the respective TB is transmitted; in the third transmission of each TB (in slots #7, and #8) the "3" redundancy version of the respective TB is transmitted; and, in the fourth transmission of each TB (in slots #9, and #10) the "1" redundancy version of the respective TB is transmitted. In the example shown in Fig. 8b, the TBs and the further repetitions are transmitted without gap between them.

In general, in the RV-first pattern, between two transmissions of a TB, there may be a (e.g., one) transmission of each other scheduled TB. The redundancy version of the different TBs may be transmitted in the same order (which may be specified by the RV-first pattern).

The RV-first pattern may allow to increase time-diversity which may allow to improve the reliability especially in less frequency-diverse situation. In general, in the RV-first pattern, the transmissions/repetitions of the TBs may be performed successively (e.g., in consecutive slots), i.e., without a gap between the transmissions/repetitions. However, there may also be gap between transmissions/repetitions, which may further increase time-diversity.

**Fig. 8c** and **Fig. 8d** show further examples of interleaving patterns without repetition where the TBs are scheduled without gap and with gap, respectively. They have explained above when illustrating a transmission gap between TBs.

It is further noted that time domain interleaving can also be used in interleave-division multiple-access (IDMA) to increase the capacity.

### Joint scheduling indication and TDRA Table

In general, the scheduling indication may indicate an entry of a TDRA, table, and said entry may indicate the number N and the scheduling gap K. Furthermore, said entry may indicate the transmissions scheduled by the multiple TB scheduling DCI and may indicate, for each of the transmissions, one or more resource(s) for the transmissions. The entry may also indicate other parameters relevant for the scheduled transmissions such, as the interleaving pattern and/or a transmission gap as further described below.

In particular, the multiple TB scheduling DCI may indicate jointly, to the UE, one, multiple, or all of i) the number N of TBs, ii) the number of repetitions, iii) a transmission gap and iv) an interleaving pattern. In other words, the scheduling indication in the multiple TB scheduling DCI may be a joint indication of the scheduling of the N TBs and one or more of the previous points i) to iv).

For instance, such a joint scheduling indication may be a parameter in the DCI or a field in the DCI. The joint scheduling indication may also be a reference to an entry of a time domain resource allocation, TDRA, table. In particular, the joint indication may be an indication of an index (e.g., the row index) that indicates an entry (e.g., a row) of a TDRA table. That is, the joint scheduling indication may be indicated by a TDRA table, where columns corresponding to one or more of the above parameters i) to vi) have been added. In other words, the TDRA table signaling framework may be enhanced to support multiple TB scheduling, for instance, by extending an existing TDRA table by additional entries/rows/columns.

An exemplary TDRA table for multiple TB scheduling is illustrated below.

| **Row index** | **dmrs-Position** | **PDSCH mapping type** | **K_0** | **S** | **L** | **Number of TBs** | **Number of Repetitions** | **Transmission gap** | **Interleaving pattern** |
|---|---|---|---|---|---|---|---|---|---|
| ... | ... | ... | ... | ... | ... | ... | ... | ... | ... |
| X | ... | ... | 2 | ... | ... | 2 | 4 | 1 | NA |
| X+1 | ... | ... | 2 | ... | ... | 2 | 4 | NA | Pattern#1 |
| X+2 | ... | ... | 2 | ... | ... | 4 | 1 | 0 | NA |
| X+3 | ... | ... | 2 | ... | ... | 4 | 1 | 1 | NA |
| ... | ... | ... | ... | ... | ... | ... | ... | ... | ... |

As illustrated in the exemplary table above, a TDRA table for multiple TB scheduling may comprise (corresponding respectively to the last four rows in the exemplary table above):
i) a row specifying or indicating, for one or more (or even each) row index, the number N of TBs;
ii) a row specifying or indicating, for one or more (or even each) row index, the number M of repetitions;
iii) a row specifying or indicating, for one or more (or even each) row index, the transmission gap; and/or
iv) a row specifying or indicating, for one or more (or even each) row index, the interleaving pattern.

In other words, for each row index, one or more of the parameters mentioned in the above points i) to iv) may be defined. If a row does not (explicitly) specify a row index (corresponding, in the above exemplary table, to the "NA" entries in the last four rows), a predefined or default value may be used. For instance, some interleaving patterns may be associated with a default transmission gap.

In particular, the row index may be indicated by the scheduling indication in the multiple DCI scheduling DCI. That is, the row index may be the joint scheduling indication in the multiple DCI scheduling DCI that indicates scheduling of the N TBs, and one or more of the parameters i) to iv).

Using a joint scheduling indication of multiple parameters (e.g., multiple of the number of TBs, the number M of repetitions, the interleaving pattern, and the transmission gap) may facilitate scheduling of multiple TBs without or with minimal additional DCI overhead. Furthermore, a joint scheduling indication, for instance based on a TDRA table, may allow flexible allocation of time/frequency domain resources for transmission/reception of multiple TBs by means of a single DCI

It is further noted that a TDRA table supporting multiple TB scheduling may be configured/associated with a certain Search Space (SS) set or Bandwidth part (BWP). That is, there may one or more TDRA tables supporting multiple TB scheduling and one or more TDRA tables not-supporting multiple TB scheduling.

### Configured Grant (CG) and Semi-Persistent Scheduling (SPS) framework

In general, a UE (e.g., its processing circuitry) may obtain, in operation, from a multiple TB scheduling DCI, an indication to activate Configured Grant (CG) or Semi Persistent Scheduling (SPS). For instance, the scheduling indication indicating the scheduling of the N TBS may be or include an indication to activate CG/SPS. After obtaining the indication to activate CG/SPS, the circuitry, in operation, may activate the CG or the SPS in accordance with said indication. The CG or the SPS may indicate a plurality of transmission opportunities. The circuitry, in operation, may deactivate the CG or the SPS after N of the transmission opportunities starting from the reception of said multiple TB scheduling DCI. It is noted that SPS and CG (in particular, "Type 2" CG) may be used to enable multiple TB scheduling in DL and UL respectively.

That is, the CG/SPS may be enhanced to enable multiple TB scheduling with or without repetition. In particular in this case, the multiple TB scheduling DCI may just be a trigger (e.g., a one-bit field in the multiple TB scheduling DCI). That is, the number N of transport blocks, the number M of repetitions, the interleaving pattern, and the transmission gap may be indicated by other means, e.g., may be signaled by CG/SPS with RRC configuration. However, the present invention is not limited thereto as the interleaving pattern and/or the transmission gap may or may not be indicated by the multiple TB scheduling DCI activating the CG/SPS.

In general, a plurality of transmission opportunities (e.g., time resources) may be configured by RRC (e.g. using the CG/SPS framework). A part of the plurality of transmission opportunities may be selected by control information of the CG/SPS triggering DCI. The remaining of the part of the plurality of transmission opportunities is released. For instance, the CG/SPS DCI may include an explicit indication of the transmission opportunities that are to be selected, from the configured transmission opportunities, for transmission/reception of the scheduled TBs (and further repetitions, if applicable). If there is only a triggering flag in the CG/SPS DCI, the number N of scheduled TBs and/or the number of transmission opportunities may be configured via RRC for the triggered CG/SPS configuration.

### Transport Block number N indicated by CG/SPS triggering DCI

In general, the TB number N may be indicated in the DCI triggering/activating CG/SPS. That is, the control information (e.g., the scheduling indication indicating the scheduling of the N TBs) of the multiple TB scheduling DCI may be or include the number N of TBs. In this case, the UE may automatically release the CG/SPS after N transmission opportunities or after N actual transmissions of TBs. Alternatively, the UE may automatically release the CG/SPS after a number of transmission opportunities equal/corresponding to the number of scheduled transmissions including the repetitions, or after actually transmitting/receiving the scheduled TBs including the repetitions. In particular, the UE/base station may use not all of the transmissions/repetitions scheduled by the DCI triggering/activating CG/SPS to actually transmit TBs/repetitions.

### Transport Block number N indicated/configured by RRC

In general, as already mentioned above, the number N of transport blocks may be indicated via RRC.

In particular, within a certain CG/SPS configuration, the number N of TBs or a timer may be configured by RRC. In case of using timer, the timer may e.g. start from the transmission of the first TB or, alternatively, may start from the transmission of the multiple DCI scheduling DCI. If a CG/SPS configuration is triggered, it will automatically release/terminate the periodic transmission after timer expires or after the TB number of transmissions. In other words, a plurality of CG/SPS configurations may be configured, and the CG/SPS triggering DCI may explicitly or implicitly indicate one of the configured CG/SPS configurations. For example, the CG/SPS triggering DCI may trigger that CG/SPS, whose time-domain resources include the slot in which the CG/SPS triggering DCI is transmitted. As a further example, if more than one CG/SPS configuration includes the slot where the CG/SPS triggering DCI is transmitted, the CG/SPS with the lower index or higher priority will be triggered. The index and/or priority may, for instance, be RRC configured in the CG/SPS configuration.

**Fig. 9** illustrates the automatic release when scheduling multiple TBs using the CG/SPS framework. It is noted that the interleaving patter, transmission gap, and number N and M are the same as in Fig. 8a. Therefore, description of the same is not repeated. As shown in Fig. 9, the CG/SPS is automatically released/deactivated after the last scheduled transmission of a TB (including the scheduled repetitions). That is, after transmission of the "1" Redundancy version of the second TB (i.e. after slot #11, #1 being the slot transmitting the CG/SPS triggering DCI).

Using CG/SPS to schedule multiple TBs with a single DCI may be a simple and efficient solution as it uses the already existing SPS/CG framework. In particular, this approach may reduce the number of parameter that have to be introduced into the standard and, therefore, may have a low specification impact. Furthermore, in contrast to the current SPS/CG framework, using CG/SPS for multiple TB scheduling may enable the gNB to finish scheduling of multiple TBs by just using one DCI, rather than by using two DCIs (one for activating and for deactivating the SPS/CG). This may allow the UE to not monitor the PDCCH for SPS/CG deactivation, which may further save PDCCH monitoring power consumption.

In general, a Physical Downlink Control Channel, PDCCH, monitoring operation of the UE may be adapted in accordance with the number N of TBs scheduled by the DCI.

In general, multiple TBs scheduling may allow for further power saving by adapting the accordingly. More specifically, multiple TB scheduling may allow to schedule the same amount of resources and/or TBs with less DCIs. Therefore, as more resources are scheduled to a UE at one time, the PDCCH monitoring may be adapted to the multiple TB scheduling. Such an adaption of the PDCCH monitoring operation/behavior may facilitate to further reduce the power consumption of the UE itself, but may also be used to give more scheduling opportunities to other UEs.

For instance, multiple sets of parameters of "monitoringSlotPeriodicityAndOffset" and "monitoringSymbolsWithinSlot" can be configured. A single TB scheduling DCI, on the other hand, may trigger the UE to switch to PDCCH monitoring occasions specified by a first set of parameters; and a multiple TB scheduling DCI may trigger the UE to switch to PDCCH monitoring occasions specified by a second set of parameters. If the UE already uses the first set when receiving the single TB scheduling DCI, it may continue to use the first set of parameters. Likewise, if the UE already uses the second set of parameters when receiving the multiple TB scheduling DCI, it may continue to use the second set.

In other words, when receiving a single TB scheduling DCI and/or when receiving a multiple TB scheduling DCI, the UE may reassess which of two or more sets of said parameters it should use, or more generally, reassess its PDCCH monitoring behavior. In general, one or both of multiple TB scheduling DCIs and single TB scheduling DCIs may triggers the parameter set adaptation/reassessment.

More specifically, when a UE receives a DCI, it (or its processing circuitry) may determine whether or not to change its PDCCH monitoring operation. This decision may be based on whether said DCI is a single TB scheduling DCI or multiple TB scheduling DCI. However, this decision may be depend (e.g., take into account) on further criteria such as battery status, expected traffic, and the like.

For instance, if said DCI is a single TB scheduling DCI, the UE may determine to monitor a first set of PDCCH candidates. If, on the other hand, said DCI is a multiple TB scheduling DCI, the UE may determine to monitor a second set of PDCCH candidates. In other words, the UE may determine whether to monitor a first or a second set of PDCCH candidates. The second set of PDCCH candidates may be smaller than the first set of PDCCH candidates. Alternatively or in addition, the UE may determine to monitor its PDCCH less frequently when said DCI is a multiple TB scheduling DCI in comparison to when said DCI is a single TB scheduling DCI. The UE may monitor the reduced number of PDCCH candidates or perform the monitoring less frequently for a predetermined period of time and/or up to reception of another DCI (in particular, up to reception of a single TB scheduling DCI). In particular, when receiving a multiple TB scheduling DCI, the UE may even determine to stop the PDDCH monitoring entirely for a predetermined period of time.

### Cancellation Indication (CI)

In general, control information (e.g., in a DCI signalling), may include a **Cancellation Indication (CI).** In general, such a CI may be a UL CI or a DL Pre-emption Indication (PI). The CI may indicate one or more transmissions that are to be cancelled. A CI may indicate these one or more transmissions to be cancelled by indicating a resource (e.g., one or more time-domain resources, a number of symbols or an entire slot). In other words, a CI may include an indication indicating a resource. In general, the DCI scheduling the one or more transmissions indicated by a CI is received/transmitted before the control information including said CI, and said CI is received/transmitted before the indicated transmissions have been performed.

In the following, cancellation rules that allow to indicate, in an efficient manner, one or more transmissions of the transmissions scheduled by a multiple TB scheduling DCI are presented.

### Cancellation Rules - general Remarks

In general, the UE (e.g., circuitry 630 or 635) may determine (e.g., in step 785) the transmissions that are cancelled by the CI. This determination may be based on a cancellation rule and/or the resource indicated by the CI. For each transmissions, the result of this determination may further depend on the resource of said transmission.

The base station (e.g., circuitry 680 or 685) may determine the resource, to be indicated by the CI, based on the same cancellation rule that the uses to interpret the CI. That is, a UE uses the cancellation rule to determine the cancelled transmission(s) based on the indicated resource, whereas a base station uses the cancellation rule to determine (e.g., in step 740) the resource to be indicated. More specifically, the base station may determine the indicated resource such that a UE determines, based on the cancellation rule and said indicated resource, the transmissions to be cancelled correctly. Here "*correctly*" means that the UE determines that the transmissions to be cancelled are those transmissions the bases station actually intends to cancel (e.g., those transmission the base station has determined to be cancelled in step S730).

It is further noted that, in some implementations, the cancellation rule applies only to those transmissions scheduled by the multiple TB scheduling DCI that are after the slot the CI is transmitted and/or after the slot of the indicated resource. In other words, in some implementations, a CI may only cancel transmissions scheduled in a slot after said CI and/or in a slot after the slot of the resource indicated by said CI.

### Cancellation Rules without TB priority

In the following, five exemplary predetermined/cancellation rules for cancellation of (some or all of) scheduled multiple TBs are presented. These rules are examples for rules that may apply irrespective of the priorities of the scheduled N TBs. In particular, these rules do not require that priorities have been assigned to the TBs.

However, the present invention is not limited thereto. In general, any cancellation rule may be implemented using priorities of the TBs. For instance, a predetermined may only apply to TBs that have a particular priority (e.g., a priority above/below a certain threshold). For instance, i) a cancellation rule may only apply to high-priority TBs (e.g., above a certain threshold priority), and all low-priority TBs (e.g., below a certain threshold priority) are cancelled when a CI is received; ii) a cancellation rule may only apply to low-priority TBs, and the high-priority TBs are never cancelled when a CI is received, or iii) different cancellation rules may be used for different TBs (e.g., N, possibly different, cancellation rules may be defined respectively for the N TBs).

### First Exemplary Cancellation Rule

In some embodiments, it is determined, for each transmission of the transmissions scheduled for the N TBs, if the indicated resource (indicated by the CI) overlaps with any of resources of said transmission, that said transmission is cancelled.

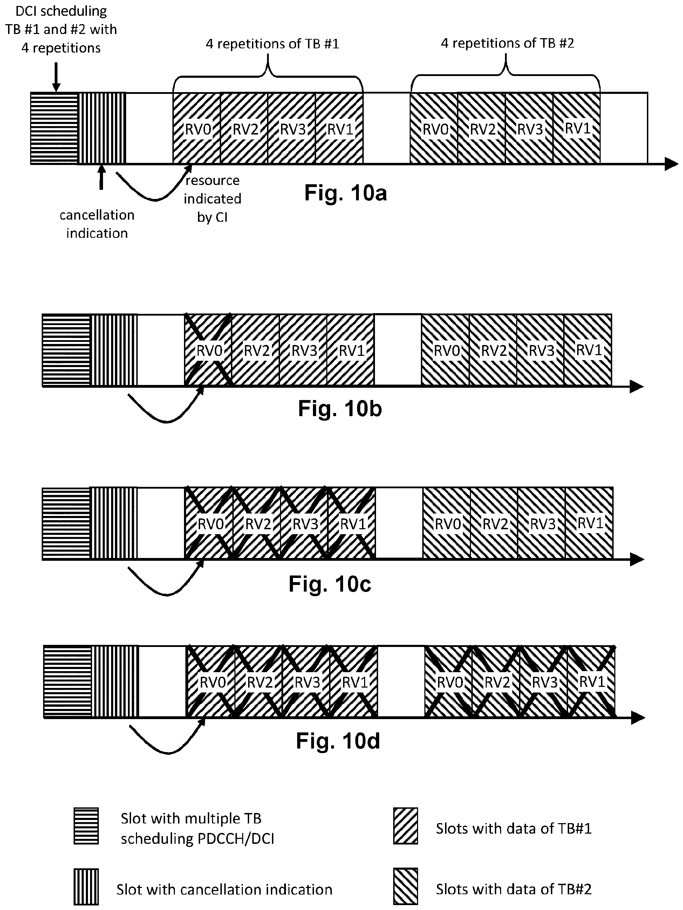

The first cancellation rule is now further explained with reference to Fig. 10a and Fig 10b. In **Fig. 10a**, a multiple TB scheduling DCI is received in slot #1. The multiple TB scheduling DCI indicates scheduling, of two TBs, four repetitions of each TB, the *"TB-first pattern"* (including the TB-first interleaving pattern), already explained with respect to Fig. 8a, and a transmissions gap of one slot between transmissions of different TBs. Furthermore, control information including a CI is received in slot #2. The CI indicates the entire slot #4 or a resource in slot #4 that overlaps with first transmission (RV0) of TB #1.

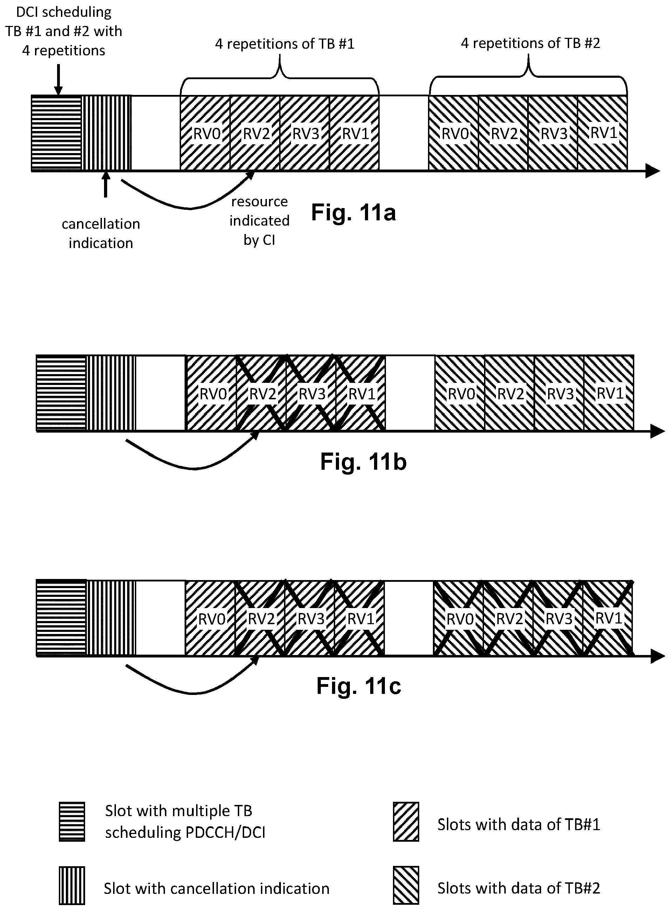

**Fig. 10b** illustrates which of the transmissions in Fig. 10a would be cancelled if the first cancellation rule would be applied. More specifically, in Fig. 10b (as well in Fig. 10c, 10d, 11b, and 11c) the transmissions in crossed-out slots are transmissions that are cancelled according to the cancellation rule illustrated in said figure. That is, as illustrated in Fig. 10b, only the first transmission (RV0) of TB #1, which overlaps with the indicated resource, is indicated/determined to be cancelled. On the other hand, the other three transmissions of TB#1 as well as the 4 transmissions of TB#2, which do not overlap with the indicated resource are not cancelled.

In general, if a resource of a transmission overlaps with the indicated resource, it may be determined that said transmission is cancelled. Furthermore, if none of the resources of a transmissions overlaps with the indicated resource, it may be determined that said transmission is not cancelled. In particular, if the indicated resource overlaps with none of the resources of the transmissions of the transmissions scheduled for the TBs, it may be determined that none of the transmissions scheduled for the TBs is cancelled.

In other words, the CI may indicate that (e.g., exactly) those transmissions (e.g., of the transmission scheduled by the multiple TB scheduling DCI) that overlap with the resource indicated by said CI are to be cancelled. That is, according to the First Cancellation Rule, only those repetition(s) of the TBs that overlap with the resource indicated by CI may be cancelled. This can also apply when repetitions of the TBs utilize certain interleaving patterns, e.g. the RV-first pattern described above.

The first cancellation rule may allow for rather flexible cancellation of a specific/single transmission and may have a low specification impact. The performance of the transmission can be affected in a low level by keeping as much transmissions of the TBs as possible. In particular, the second cancellation rule may allow to cancel selectively individual transmissions of the TBs.

### Second Exemplary Cancellation Rule

In some embodiments, it is determined, for each TB of the TBs scheduled by the multiple TB scheduling DCI, if the indicated resource overlaps with any of the resources of the one or more transmissions scheduled for said TB, that those transmissions of the one or more transmissions scheduled for said TB that overlap with the indicated resource and/or are scheduled after the indicated resource are cancelled.

The second cancellation rule is now further explained with reference to Fig. 11a and Fig 11b. In **Fig. 11a**, a multiple TB scheduling DCI is received in slot #1. The multiple TB scheduling DCI indicates scheduling, of two TBs, four repetitions of each TB, the *"TB-first pattern"* (including the TB-first interleaving pattern), already explained with respect to Fig. 8a, and a transmissions gap of one slot between transmissions of different TBs. Furthermore, control information including a CI is received in slot #2. The CI indicates the entire slot #5 or a resource in slot #5 that overlaps with first transmission (RV2) of TB #1.

**Fig. 11b** illustrates which of the transmissions in Fig. 11a would be cancelled if the second cancellation rule would be applied. That is, as illustrated in Fig. 11b, the second transmission of TB #1 (RV2, in slot #5), which overlaps with the indicated resource (in slot #5) is indicated/determined to be cancelled. Furthermore, since they are after a transmission of the same TB that overlaps with the indicated resource, the third (RV3, in slot #6), and fourth transmission (RV1, in slot #6) of TB #1 are indicated/determined to be cancelled. That is, of the transmissions of TB #1, only the first transmission of TB #1, which neither overlaps nor is after a transmission of TB #1 that overlaps with the indicated resource, is not cancelled. Furthermore, since none of the four transmissions of TB #2 overlaps with the indicated resource, none of the transmissions are indicated/determined to be cancelled.

In general, according to the second cancellation rule, if any of the repetitions of a certain TB (or TBs) overlaps with the resource indicated by CI, all the repetitions of this TB (or these TBs) starting from the indicated resources may be cancelled. More specifically, for each of the TBs, it may be determined, if the indicated resource overlaps with none of the resources scheduled for the transmissions of said TB, that none of the transmissions scheduled for said TB is cancelled. Furthermore, it may be determined that all transmissions before (and not overlapping) the indicated resource are not cancelled. Moreover, for each of the TBs, it may be determined, if the indicated resource overlaps with a resource of the resources scheduled for the transmissions of said TB, that those transmissions of said TB that are overlapping and/or after the indicated resource are cancelled.

The second cancellation rule may allow cancellation of some or all transmissions of a specific/selected TB and may have a low specification impact. The implementation of the device would be in a low level because the judgement/determination is not performed for every transmission of the TBs. In particular, the second cancellation rule may allow to cancel, with a single DCI, all large number of transmissions of a specific TB, but still allows for the flexibility to not cancel a suitable (freely selectable) number of transmission of said TB.

### Third Exemplary Cancellation Rule

In some embodiments, it is determined, for each TB of the TBs scheduled by the multiple TB scheduling DCI, if the indicated resource overlaps with any (e.g., at least one) of the resources of the one or more transmissions scheduled for said TB, that all of the one or more transmissions scheduled for said TB are cancelled.

**Fig. 10c** illustrates which of the transmissions in Fig. 10a would be cancelled if the third cancellation rule would be applied. That is, as illustrated in Fig. 10c, since a resource of one of the transmissions of TB #1 overlaps with the indicated resource (more specifically, the first transmission of TB #1 overlaps with the indicated resource), all four transmissions of TB #1 are indicated/determined to be cancelled. Furthermore, since none of the four transmissions of TB #2 overlaps with the indicated resource, none of the transmissions are indicated/determined to be cancelled.

In general, according to the third cancellation rule, if any of the repetitions of a certain TB (or TBs) overlaps with the resource indicated by the CI, all the repetitions of this TB (or these TBs) may be cancelled. More specifically, for each of the TBs, it may be determined, if the indicated resource overlaps with none of the resources scheduled for the transmissions of said TB, that none of the transmissions scheduled for said TB is cancelled. Furthermore, for each of the TBs, it may be determined, if the indicated resource overlaps with a resource (e.g., any resource, or at least one resource) of the resources scheduled for the transmissions of said TB, that all transmissions of said TB are cancelled. In particular, either all or none of the transmissions of a TB may be cancelled.

The third cancellation rule may allow cancellation of all transmissions of a specific/selected TB and may have a low specification impact. In addition, to cancel all the transmission of the TB(s) provides better protection for the other traffic with higher priority. In particular, the third cancellation rule may allow to cancel, with a single DCI, all (remaining) transmissions of a specific TB. Furthermore, may be particularly simple as either all or none of the transmissions of a TB are cancelled.

### Fourth Exemplary Cancellation Rule

In some embodiments, it is determined, if the indicated resource overlaps with any of the resources of any transmission of the transmissions scheduled for the TBs, that all the transmissions scheduled for (all) the TBs are cancelled. In other words, if the indicated resource overlaps with at least one resource of at least one transmission of the transmissions scheduled for the TBs, it may be determined that all the transmissions scheduled for the TBs are cancelled.

**Fig. 10d** illustrates which of the transmissions in Fig. 10a would be cancelled if the fourth cancellation rule would be applied. That is, as illustrated in Fig. 10d, since a resource of one of the transmissions of the TBs overlaps with the indicated resource (more specifically, the first transmission of TB #1 overlaps with the indicated resource in slot #4), all transmissions of all TBs are indicated/determined to be cancelled.

In general, if any of the TBs resources overlaps with the resource indicated by the CI, all the repetitions of all the TBs may be cancelled. More specifically, if the indicated resource overlaps with none of the resources scheduled for the transmissions of the TBs, it may be determined, that none of the transmissions scheduled by the multiple TB scheduling DCI is cancelled. Furthermore, if the indicated resource overlaps with any (e.g., at least one) resource of the resources scheduled for the transmissions of the N TBs, it may be determined that all transmissions/repetitions scheduled by the multiple TB scheduling DCI are cancelled. In particular, according to the fourth cancellation rule, either all or none of the transmissions of the TBs may be cancelled.

The fourth cancellation rule may allow cancellation of all transmissions of all TBs scheduled by a multiple TB scheduling DCI and may have a low specification impact. In addition, to cancel all the transmission of all the TB(s) provides better protection for the other traffic with higher priority. In particular, the fourth cancellation rule may allow to cancel, with a single DCI, all (remaining) transmissions scheduled by multiple TB scheduling DCI. Furthermore, may be particularly simple as either all or none of the transmissions is cancelled.

### Fifth Exemplary Cancellation Rule

In some embodiments, it is determined that those transmissions of the transmissions scheduled for the N TBs that overlap with the indicated resource and/or are scheduled after the indicated resource are cancelled.

**Fig. 11c** illustrates which of the transmissions in Fig. 11a would be cancelled if the fifth cancellation rule would be applied. That is, as illustrated in Fig. 11c, since the indicated resource overlaps with the second transmission of TB #1 (RV2, in slot #5), said second transmission of TB #1 is cancelled. Furthermore, since they are after the indicated resource (slot #5), the third transmission of TB #1 (RV3, in slot #6), the fourth transmission of TB #1 (RV1, in slot #7), and all four transmissions of TB #2 (in slots #9 to #12) are cancelled.

In general, if any of the repetitions of a certain TB (or TBs) overlaps with the resource indicated by the CI, all the repetitions of all the TBs (or these TBs) starting from the indicated resources may be cancelled. This can also apply when repetitions of the TBs utilize certain interleaving patterns, e.g. the RV-first, described above.

More specifically, it may be determined that all transmissions that are scheduled, by the multiple TB scheduling DCI, before the indicated resource are not cancelled. Furthermore, if a resource of a transmission overlaps with the indicated resource, it may be determined that said transmission is cancelled.

Moreover, it may be determined, if a resource of a transmission overlaps with the indicated resource, that all transmissions that are scheduled, by the multiple TB scheduling DCI, after the indicated resource are cancelled. However, in some implementations of the fifth cancellation rule, all transmissions that are scheduled, by the multiple TB scheduling DCI, after the indicated resource are cancelled. That is, the transmissions after the indicated resource may be cancelled, even if the indicated resource does not overlap with at least one resource of the transmissions scheduled by the multiple TB scheduling DCI (e.g., in case the indicated resource falls into a transmission gap between two transmission gap of the TBs).

The fifth cancellation rule may allow cancellation of some or all transmissions of the TBs scheduled by a multiple TB scheduling DCI and may have a low specification impact. In addition, it can achieve a tradeoff between the performance of the scheduled TBs and the impact to other higher priority traffic. Furthermore, the fifth cancellation rule may allow the flexibility to not cancel a suitable (freely selectable) number of transmission of each TB. In particular, when using the RV first pattern, described above, it may be possible keep a number of transmissions/receptions of each of the N TBs for decoding each of the TBs with sufficient reliability.

### Cancelation rules with TB priority

In general, a plurality of **priorities** (priority levels) may be supported. The priority (priority level) of a TB may indicate the importance of the transmissions/receptions of said TB. In particular, all transmissions of a TB may have the same priority. Accordingly, in the present disclosure, the priority of a transmission of a TB may refer to/or be the priority of said TB.

That is, the higher a priority level the more important are transmissions/receptions of said TB. For instance, the priority may indicate how time-critical the transmissions/reception of a TB is and/or the requirements in terms of reliability are. Correspondingly, the priority of a TB may be related to QOS requirements of a service related to said TB. It is noted that all transmissions of a TB may have the same priority. It is further noted that the priority of a transmission may be the priority of the TB transmitted (or to be transmitted) by said transmission. Usage of different priority levels, in particular in combination with cancellation rules as described below, may allow to use limited resources more efficiently. In other words, it may facilitate to selectively cancel particular, less important or less time-critical, TBs.

In general, when using TB priorities, UL CI may only be applicable to the UL transmissions indicated/configured as low priority level (e.g., below a certain/threshold priority level). That is, it may be determined that none of the transmissions equal to or above a threshold priority level is to be cancelled. Furthermore, it may be determined, without further considerations, that all transmissions below said threshold priority are cancelled. That is, all low-priority transmissions are always cancelled. However, the present invention is not limited thereto. For instance, it may be determined that only those low-priority transmissions that satisfy certain conditions are to be cancelled. For instance, one of the first to fifth cancellation rule may be applied to determine which of the low-priority transmissions is cancelled.

In the following, two exemplary predetermined/cancellation rules for cancellation of (some or all of) scheduled multiple TBs are presented. These rules are examples for rules that are based on priorities of the scheduled TBs, as described above. In particular, the sixth cancellation rule applies the first cancellation rule but only to low-priority TBs - none of the transmissions of the high-priority TBs is cancelled. The seventh cancellation rule applies the third cancellation rule but only to low-priority TBs - none of the transmissions of the high-priority TBs is cancelled.

### Sixth Exemplary Cancellation Rule

In some embodiments, it is determined, for each transmission of the transmissions scheduled for the TBs, if i) the indicated resource overlaps with any of resources of said transmission and ii) a priority of that TB that is transmitted by said transmission is lower than a predetermined threshold (in the present disclosure, also referred to as threshold level), that said transmission is cancelled.

In general, according to the sixth cancellation rule, UL CI is only applicable to the UL transmissions indicated/configured as low priority level. More specifically, only the repetition(s) of the TB(s) with a priority lower than a threshold level and overlapping with the resource indicated by the CI will be cancelled.

In other words, for each scheduled transmission, if none of the resources of said transmission overlaps with the indicated resource, it may be determined that said transmission is not cancelled. Furthermore, for each scheduled transmission, if the priority level of said transmission is not lower than a threshold level, it may be determined that said transmission is not cancelled. Moreover, for each scheduled transmission, if the priority of said transmission is lower than said threshold level and a resource of said transmission overlaps the indicated resource, it may be determined that said transmission is cancelled. That is, only if both conditions (overlap and low priority) are fulfilled a transmission is cancelled.

The sixth cancellation rule may allow for rather flexible cancellation of a specific/single transmission of low priority and may have a low specification impact. The performance of the transmission can be affected in a low level by keeping as much transmissions of the TBs as possible. In particular, the sixth cancellation rule may allow to cancel selectively individual transmissions of the low-priority TBs.

It is further noted that the sixth cancellation rule can also be applied when repetitions of the TBs utilize certain interleaving patterns, e.g. RV-first in the Embodiment, described above.

### Seventh Exemplary Cancellation Rule

In some embodiments, it is determined, for each TB of the plurality of TBs, if the indicated resource overlaps with any of resources of the one or more transmissions scheduled for said TB and if a priority of said TB is lower than a predetermined threshold (in the present disclosure, also referred to as threshold level), that all the one or more scheduled transmissions of said TB are cancelled.

In general, according to the seventh cancellation rule, UL CI is only applicable to the UL transmissions indicated/configured as low priority level. More specifically, if any repetition(s) of a certain TB (or TBs) with a priority lower than a threshold level overlaps with the resource indicated by CI, all the repetition(s) of this TB (or these TBs) will be cancelled.

In other words, for each of the TBs, it may be determined, if the indicated resource overlaps with none of the resources scheduled for the transmissions of said TB, that none of the (one or more) transmissions scheduled for said TB is cancelled. Furthermore, for each of the TBs, it may be determined, if the priority of said TB is not lower than a threshold level, it may be determined that none of the transmissions scheduled for said TB is cancelled. Moreover, for each of the TBs, it may be determined, if the priority of said TB is lower than the threshold level and the indicated resource overlaps with a resource (e.g., any resource, or at least one resource) of the resources scheduled for the transmissions of said TB, that all transmissions of said TB are cancelled. That is, only if both conditions (overlap and low priority) are fulfilled all transmissions of a TB are cancelled. In particular, either all or none of the transmissions of a TB may be cancelled.

The seventh cancellation rule may allow cancellation of all transmissions of a specific/selected TBs of low priority and may have a low specification impact. In addition, to cancel all the transmission of the TB(s) provides better protection for the other traffic with higher priority.

### Priority Indication and Priority Determination

In the following, exemplary techniques for the indication and/or determination of the priorities of each TB of the plurality of TBs scheduled by a multiple TB scheduling DCI are described.

### Implicit priority indication

In some embodiments, for each of the TBs scheduled by the multiple TB scheduling DCI, the priority of said TB is determined in accordance with a comparison of a time interval with a threshold value.

In general, the priority of each of the TBs scheduled by the multiple TB scheduling DCI may be determined based on one or more threshold values and/or the time-domain resources allocated for the transmission(s) of said TB.

In general, such a **threshold value** may be a default value (e.g. defined in a standard) or be indicated by Radio Resource Control (RRC) signalling. There may one threshold value (in particular, in case of two supported priorities) or **multiple** threshold values (e.g., one less than the number of supported priorities). The threshold value(s) may be used to determine (UE) and/or indicate (base station) the priorities of the TBs scheduled by the multiple TB scheduling DCI. In general, the threshold value may be a number, B, of slots. This number B may be a non-negative integer.

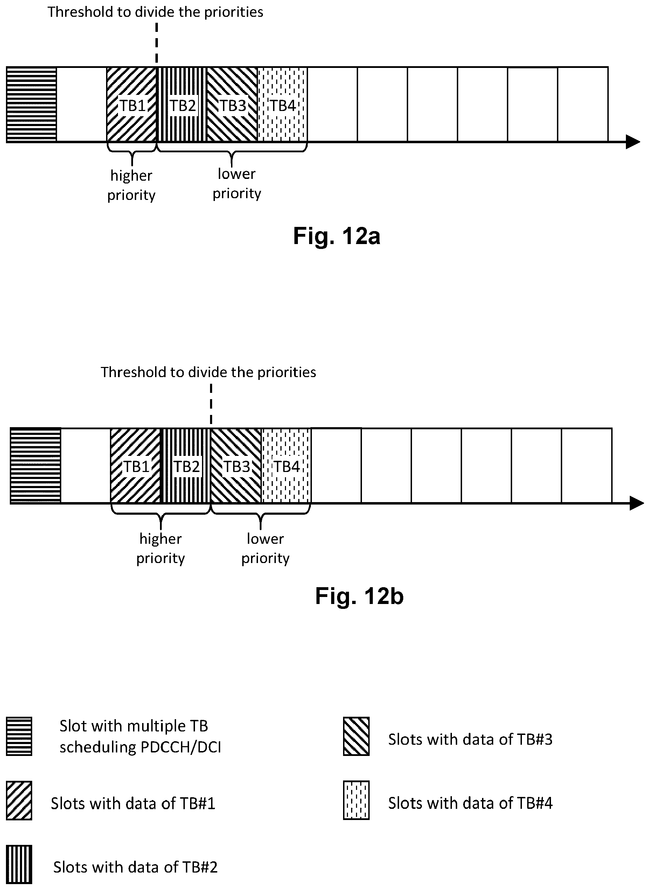

Furthermore, the threshold value may correspond to a **boundary** (in time domain) between TBs of different priority. In other words, the threshold value may define/indicate a boundary that may be used indicate/determine the priority of the N TBs. Such a boundary may, for instance, be between the slot that is B slots after the DCI slot and the slot that is B+1 slots after the DCI slot. Here, it should be noted that, in the present disclosure, the term "**DCI slot**" refers/is the slot in which the multiple TB scheduling DCI is received/transmitted. For instance, in **Fig. 12a**, there is one boundary/threshold value that divides the low and the high-priority TBs. Said boundary is between slot #3 and slot #4, i.e., two slots after the DCI slot (which is in slot #1). Accordingly, in Fig. 12a, B may be 2. Furthermore, in **Fig. 12b**, there is one boundary/threshold value that divides the low and the high-priority TBs. Said boundary is between slot #4 and slot #5, i.e., three slots after the DCI slot (which is in slot #1). Accordingly, in Fig. 12b, B may be 3.

It should however be noted that the number B not necessarily defines/indicates the boundary with respect to the DCI slot. For instance, the boundary may be between the slot that is B slots after the slot of the first transmission of the N TBs and the slot that is B+1 slots after the slot of the first transmission of the N TBs.

It is further noted that the number of slots B (and, thus the boundary) may be given/indicated in terms of a number T. Here, T may be a non-negative integer that indicates the number of TBs of the N TBs that are of a particular priority level. That, is the boundary may be between the slot, in which the T-th transmission among the first transmissions of the N TBs is to be transmitted, and the slot following said slot. In other words, the boundary may be immediately after the first slot after which transmissions of at least T different TBs of the N TBs are scheduled. For instance, in Fig. 12a T may be 1; and in Fig 12b T may be 2.

For each threshold values/boundary, the number B of slots and/or the number T of TBs may, for instance be indicated by RRC or be a default value (e.g., given by the relevant standard)

It is noted that, when the boundary(s) is/are given in terms of a number of TBs of a particular priority, the boundary depends on the scheduled transmissions of the N TBs.. That is, the UE may determine the boundary based on the number T of TBs and, e.g., the time-domain resources of the scheduled transmissions. If, on the other hand, the boundary(s) is/are given in terms of a number of slots, the boundary may not depend on the scheduled transmissions.

As mentioned above, for each of the N TBs, the priority of said TB may be determined in accordance with (e.g., based on) a comparison of a time interval with a threshold value. For instance, the **time interval** may be the time interval (e.g., in terms of slots) between the multiple TB scheduling DCI and the first transmission among the one or more scheduled transmissions of said TB. In general, in this comparison it may be determined whether the first transmissions of said TB is before or after a boundary corresponding to a threshold value.

In the case that only two priorities are supported (e.g., "low" and "high" priority), the priorities can be divided into low and high-priority TBs based on one boundary/threshold. In this case, the TBs that have their first transmission scheduled before the boundary may be the high-priority TBs, whereas the TBs that have their first transmission scheduled after the boundary may be the low-priority TBs. In general, the priority may be higher for TBs closer to the multiple TB scheduling DCI. That is, the TBs that have at least one transmission that is scheduled before the first boundary may be the TBs of the N TBs that have the highest priority. In other words, those transmissions that have their first transmission before the first boundary may be of the highest priority. If a second boundary is defined, the transmissions that have i) none transmission before the first boundary, and ii) at least one transmission between the first and the second boundary, may be the TBs with the second-highest priority. In other words, those transmissions that have their first transmission before the first boundary between the first and the second boundary, may be the TBs with the second-highest priority. Correspondingly, those transmission that have their first transmission after the last boundary, may be of the lowest priority.

Indicating the priorities of the TBs scheduled by a multiple TB scheduling DCI implicitly by means of a boundary may reduce overhead. This also protects latency critical traffic, which are scheduled earlier than other less critical ones.

### Explicit priority indication

In general the priority of the N TBs may be indicated explicitly.

For instance, in some embodiments, the UE (e.g., the transceiver of the UE), in operation, receives a DCI signalling (this may be the same or a different DCI signalling than the multiple TB scheduling) that includes a priority indication. The priority indication may indicate, for each of the plurality of TBs scheduled by the multiple TB scheduling DCI, a priority of said TB. The UE's circuitry, in operation, may then obtain, from said DCI signalling, said indication. Furthermore, the UE's circuitry may determine, based on the priority indication, for each of the TBs scheduled by the multiple TB scheduling DCI, the priority of the TB.

In general, one or more combinations of the TB priorities may be configured (e.g., via RRC signalling). Here, a combination of TB priorities may specify/indicate, for each of the N TBs, are priority of said TB. Furthermore, each combination may be associated, e.g., in a one-to-one correspondence, with an index (or a value of an index). If configured with multiple indices (or combinations), a UE may determine the priorities for the N TBs by DCI indication, which selects one out of the multiple configured entries. In other words, the UE may select/determine one combination out of a plurality of configured combinations.

In particular, the priority indication may jointly indicate the priority of more than one (or all) of the N TBs. For instance, the priority indication may indicate an index. The priority indication or the index may indicate an entry (e.g., a row or column) of a table. In general, different values of the index may be configured with (or indicate) different/specific combinations of priorities of the N TBs. That is, the index may indicate, for each of the N TBs, the priority of said TB. For each index (or each value of the index), the combination of the N TB-priorities which said index indicates may, e.g., be signaled by RRC or be defined (e.g., in the applicable standard).

This is now further illustrated with reference to the table below.

| index | priority of 1st TB | priority of 2nd TB | ... | priority of Nth TB |
|---|---|---|---|---|
| index 1 | high | high | ... | ... |
| index 2 | high | low | ... | ... |
| ... | ... | ... | ... | ... |

As can be seen, each row of the above table corresponds to an index (e.g., index value) and specifies a particular combination of TB priorities. In other words, each row in the above table corresponds to one combination of TB priorities.

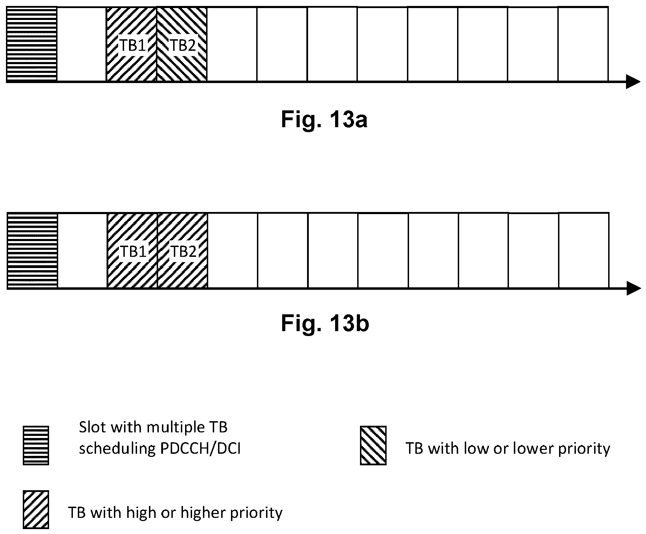

More specifically, in the above example, "index 1" is configured to indicate that the first and the second TB have a high priority. This assignment of priorities if the above table is configured and "index 1" is indicated by a priority indication is also illustrated in **Fig. 13a****.** Furthermore, "index 2" is configured to indicate that the first TB has a high priority and that the second TB has a low priority. This assignment of priorities if the above table is configured and "index 2" is indicated by a priority indication is also illustrated in **Fig. 13b****.**

Here, the TBs may be ordered according to their first scheduled transmissions. That is, the first transmission of the first TB may be before the first transmission of the second TB (and all other transmissions), the first transmission of the second TB may be before the first transmission of the third TB, and so forth (the first transmission of the N-th transmission may be the last transmission among the transmission of the N TBs).

Using explicit signalling by means of DCI signalling may facilitate indicating the priorities of the N TBs very flexibly as it may be possible to signal arbitrary priority combinations of the TB's priorities.

It is further noted that the embodiments of the present disclosure are also applicable and beneficial for relatively long Round Trip Time (RTT) scenario, e.g. for Non-Terrestrial Networks (NTNs) beyond 52.6GHz, where the number of HARQ process IDs is small compared to the RTT, i.e.
slot_length x "number of HARQ process IDs" < RTT,
because one DCI can schedule multiple slots with single HARQ process ID.

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)". The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Furthermore, the various embodiments may also be implemented by means of software modules, which are executed by a processor or directly in hardware. Also a combination of software modules and a hardware implementation may be possible. The software modules may be stored on any kind of computer-readable storage media. In particular, according to another implementation, a non-transitory computer-readable recording medium is provided. The recording medium stores a program which, when executed by one or more processors, causes the one or more processors to carry out the steps of a method according to the present disclosure.

By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

It should be further noted that the individual features of the different embodiments may individually or in arbitrary combination be subject matter to another embodiment. It would be appreciated by a person skilled in the art that numerous variations and/or modifications may be made to the present disclosure as shown in the specific embodiments. The present embodiments are, therefore, to be considered in all respects to be illustrative and not restrictive.

### Further Aspects

According to a first aspect, a UE is provided. The UE comprises a transceiver and circuitry. The transceiver, in operation, receives DCI signaling and control information. The circuitry which, in operation, obtains, from the DCI signaling, a scheduling indication. The scheduling indication indicates, for each TB of a plurality of TBs scheduling of one or more transmissions of said TB. Furthermore, the circuitry, in operation, obtains, from the control information, a cancellation indication, CI, indicating a resource. Moreover, the circuitry, in operation, determines, based on the indicated resource and a predetermined rule, which of the scheduled transmissions of the plurality of TBs are cancelled.

According to a second aspect provided in addition to the first aspect, the determining includes determining, for each transmission of the transmissions scheduled for the TBs, if the indicated resource overlaps with any of resources of said transmission, that said transmission is cancelled.

According to a third aspect provided in addition to the first or second aspect, the determining includes determining, for each TB of the plurality of TBs, if the indicated resource overlaps with any of the resources of the one or more transmissions scheduled for said TB, that those transmissions of the one or more transmissions scheduled for said TB that are scheduled after the indicated resource are cancelled.

According to a fourth aspect provided in addition to one of the first to third aspect, the determining includes determining, for each TB of the plurality of TBs, if the indicated resource overlaps with any of the resources of the one or more transmissions scheduled for said TB, that all of the one or more transmissions scheduled for said TB are cancelled.

According to a fifth aspect provided in addition to one of the first to fourth aspect, the determining includes determining, if the indicated resource overlaps with any of the resources of any transmission of the transmissions scheduled for the TBs, that all the transmissions scheduled for the TBs are cancelled.

According to a sixth aspect provided in addition to one of the first to fifth aspect, the determining includes determining that those transmissions of the transmissions scheduled for the TBs that are scheduled after the indicated resource are cancelled.

According to a seventh aspect provided in addition to one of the first to sixth aspect, the determining includes determining, for each transmission of the transmissions scheduled for the TBs, that said transmission is cancelled if the indicated resource overlaps with any of resources of said transmission and the priority of that TB that is transmitted by said transmission is lower than a predetermined threshold.

According to a eighth aspect provided in addition to one of the first to seventh aspect, the determining includes determining, for each TB of the plurality of TBs, that all the one or more scheduled transmissions of said TB are cancelled if the indicated resource overlaps with any of resources of the one or more transmissions scheduled for said TB and a priority of said TB is lower than a predetermined threshold.

According to a ninth aspect provided in addition to the seventh it eighth aspect, the circuitry, in operation, determines, for each of the TBs, the priority of said TB in accordance with a comparison of a time interval with a threshold value. Here, the time interval is a time interval between the DCI signalling and a first transmission among the one or more scheduled transmissions of said TB, and the threshold value is a default value or indicated by RRC signalling.

According to a tenth aspect provided in addition to the seventh it eighth aspect, the transceiver, in operation, receives a DCI signalling, including an indication. Said indication indicates, for each of TB the plurality of TBs, a priority of said TB. The circuitry, in operation, obtains, from the DCI signalling, said indication.

According to an eleventh aspect, a scheduling device is provided. The scheduling device comprises circuitry and a transceiver. The circuitry, in operation, generates a DCI, signaling. The DCI signalling includes an indication indicating, for each TB of a plurality of TBs, scheduling of one or more transmissions of said TB. Furthermore, the circuitry, in operation, determines which of the scheduled transmissions of the plurality of TBs are to be cancelled. Furthermore, the circuitry, in operation, determines a resource that indicates, based on a predetermined rule, the determined scheduled transmissions that are to be cancelled. Moreover, the circuitry, in operation, generates control information that includes a cancellation indication (CI) indicating the resource. The transceiver, in operation, transmits the DCI signaling and the control information.

According to a twelfth aspect, a method for a UE is provided. The method including a step of receiving DCI signaling and a step of obtaining, from the DCI signaling, an indication. Said indication indicates, for each TB of a plurality of TBs scheduling of one or more transmissions of said TB. Furthermore, the method includes a step of receiving control information and a step of obtaining, from the control information, a cancellation indication (CI) indicating a resource. Moreover, the method includes a step of determining, based on the indicated resource and a predetermined rule, which of the scheduled transmissions of the plurality of TBs are cancelled.

According to a thirteenth aspect, a method for a scheduling device is provided. The method including a step of generating a DCI signaling that includes an indication and a step of transmitting said DCI signalling. Said indication indicates, for each TB of a plurality of TBs, scheduling of one or more transmissions of said TB. Furthermore, the method includes a step of determining which of the scheduled transmissions of the plurality of TBs are to be cancelled; and a step of determining a resource that indicates, based on a predetermined rule, the determined scheduled transmissions that are to be cancelled. Moreover, the method includes a step of generating control information that includes a cancellation indication (CI) indicating the determined resource and a step of transmitting the generated control information.

## Claims

1. A user equipment, UE, comprising:
a transceiver (620) which, in operation, receives (S725, S765)
- downlink control information, DCI, signaling; and
- control information; and
circuitry (630, 635) which, in operation:
- obtains (S745), from the DCI signaling, an indication indicating, for each of a plurality of transport blocks, TBs, scheduling of one or more transmissions of said TB;
- obtains (S775), from the control information, a cancellation indication, CI, indicating a resource; and
- determines (S785), based on the indicated resource and a predetermined rule, which of the scheduled transmissions of the plurality of TBs are cancelled.

2. The UE according to claim 1, wherein
the determining (S785) includes determining, for each transmission of the transmissions scheduled for the TBs, if the indicated resource overlaps with any of resources of said transmission, that said transmission is cancelled.

3. The UE according to claim 1 or 2, wherein
the determining (S785) includes determining, for each TB of the plurality of TBs, if the indicated resource overlaps with any of the resources of the one or more transmissions scheduled for said TB, that those transmissions of the one or more transmissions scheduled for said TB that are scheduled after the indicated resource are cancelled.

4. The UE according to any of claims 1 to 3, wherein
the determining (S785) includes determining, for each TB of the plurality of TBs, if the indicated resource overlaps with any of the resources of the one or more transmissions scheduled for said TB, that all of the one or more transmissions scheduled for said TB are cancelled.

5. The UE according to any of claims 1 to 4, wherein
the determining (S785) includes determining, if the indicated resource overlaps with any of the resources of any transmission of the transmissions scheduled for the TBs, that all the transmissions scheduled for the TBs are cancelled.

6. The UE according to any of claims 1 to 5, wherein
the determining (S785) includes determining that those transmissions of the transmissions scheduled for the TBs that are scheduled after the indicated resource are cancelled.

7. The UE according to any of claims 1 to 6, wherein
the determining (S785) includes determining, for each transmission of the transmissions scheduled for the TBs, if the indicated resource overlaps with any of resources of said transmission and if a priority of that TB that is transmitted by said transmission is lower than a predetermined threshold, that said transmission is cancelled.

8. The UE according to any of claims 1 to 7, wherein
the determining (S785) includes determining, for each TB of the plurality of TBs, if the indicated resource overlaps with any of resources of the one or more transmissions scheduled for said TB and if a priority of said TB is lower than a predetermined threshold, that all the one or more scheduled transmissions of said TB are cancelled.

9. The UE according to claim 7 or 8, wherein
the circuitry (630, 635), in operation, determines, for each of the TBs, the priority of said TB in accordance with a comparison of a time interval with a threshold value, wherein
the time interval is a time interval between the DCI signalling and a first transmission among the one or more scheduled transmissions of said TB, and the threshold value is a default value or indicated by Radio Resource Control, RRC, signalling.

10. The UE according to claim 7 or 8, wherein
the transceiver (620), in operation, receives a DCI signalling, including an indication indicating, for each TB of the plurality of TBs, a priority of said TB; and
the circuitry (630, 635), in operation, obtains, from the DCI signalling, said indication indicating, for each TB of the plurality of TBs, the priority of said TB.

11. A scheduling device comprising:
circuitry (680, 685) which, in operation:
- generates (S710) a downlink control information, DCI, signaling that includes an indication indicating, for each of a plurality of transport blocks, TBs, scheduling of one or more transmissions of said TB;
- determines (S730) which of the scheduled transmissions of the plurality of TBs are to be cancelled,
- determines (S740) a resource that indicates, based on a predetermined rule, the determined scheduled transmissions that are to be cancelled; and
- generates (S750) control information that includes a cancellation indication, CI, indicating the resource; and
a transceiver (670) which, in operation, transmits (S760) the DCI signaling and the control information.

12. A method for a user equipment, UE, the method including the steps of:
receiving (S725) downlink control information, DCI, signaling;
obtaining (S745), from the DCI signaling, an indication indicating, for each of a plurality of transport blocks, TBs, scheduling of one or more transmissions of said TB;
receiving (S765) control information;
obtaining (S775), from the control information, a cancellation indication, CI, indicating a resource; and
determining (S785), based on the indicated resource and a predetermined rule, which of the scheduled transmissions of the plurality of TBs are cancelled.

13. A method for a scheduling device, the method including the steps of:
generating (S710) a downlink control information, DCI, signaling that includes an indication indicating, for each of a plurality of transport blocks, TBs, scheduling of one or more transmissions of said TB;
transmitting (S720) the DCI signaling;
determining (S730) which of the scheduled transmissions of the plurality of TBs are to be cancelled;
determining (S740) a resource that indicates, based on a predetermined rule, the determined scheduled transmissions that are to be cancelled;
generating (S750) control information that includes a cancellation indication, CI, indicating the resource; and
transmitting (S760) the control information.
